# EUROPEAN PATENT SPECIFICATION

(11) **EP 4 394 762 B1**
(45) Date of publication and mention of the grant of the patent: **11.02.2026**
(21) Application number: 23793982.2
(22) Date of filing: 02.11.2023
(51) Int. Cl.: G10L 15/22, G10L 15/04, G10L 15/26, G10L 25/87, G10L 15/183, G06F 40/279, G10L 15/32, G10L 15/16, G10L 25/78, G10L 15/18

(54) **ELECTRONIC DEVICE, AND VOICE RECOGNITION METHOD OF ELECTRONIC DEVICE**
ELEKTRONISCHE VORRICHTUNG UND SPRACHERKENNUNGSVERFAHREN EINER ELEKTRONISCHEN VORRICHTUNG
DISPOSITIF ÉLECTRONIQUE ET PROCÉDÉ DE RECONNAISSANCE VOCALE DE DISPOSITIF ÉLECTRONIQUE

(30) Priority: 02.11.2022 KR 20220144742; 21.12.2022 KR 20220181055
(43) Date of publication of application: 03.07.2024
(73) Proprietor: Samsung Electronics Co., Ltd., Suwon-si, Gyeonggi-do 16677 (KR)
(72) Inventor: LEE, Taewoo, Suwon-si, Gyeonggi-do 16677 (KR); LEE, Gilho, Suwon-si, Gyeonggi-do 16677 (KR); HONG, Yeona, Suwon-si, Gyeonggi-do 16677 (KR); KWON, Minseok, Suwon-si, Gyeonggi-do 16677 (KR); KIM, Kyungtae, Suwon-si, Gyeonggi-do 16677 (KR); SONG, Gajin, Suwon-si, Gyeonggi-do 16677 (KR); SHIN, Hoseon, Suwon-si, Gyeonggi-do 16677 (KR); LEE, Jungin, Suwon-si, Gyeonggi-do 16677 (KR); JUNG, Seokyeong, Suwon-si, Gyeonggi-do 16677 (KR)
(74) Representative: HGF
(86) International application number: PCT/KR2023/017431
(87) International publication number: WO 2024/096641

(56) References cited:
- KR-A- 20190 083 629
- KR-A- 20200 074 624
- KR-A- 20210 146 368
- KR-A- 20220 062 349
- KR-B1- 102 134 201
- US-A1- 2020 410 992
- US-A1- 2021 050 018
- US-A1- 2021 151 042

## Description

### [Technical Field]

Embodiments disclosed in this specification are related to an electronic device and a speech recognizing method of the electronic device.

### [Background Art]

Nowadays, with the development of a speech recognition technology, a speech recognition function may be implemented in various electronic devices including microphones. For example, a voice assistance service capable of providing an intuitive interface between electronic devices has recently been developed. The voice assistance service may infer a user's intent by performing natural language processing on the user's utterance, and may allow a control device to be controlled based on the inferred intent of the user. For example, the electronic device needs to recognize the content (e.g., named entity) included in a user utterance to understand the user's intent.

In the known prior art, the patent application US2020/410992A1 provides techniques for speech recognition including generating a weighted finite state transducer model by using a vocabulary list including a plurality of named entities, obtaining a first string from a speech input received from a user by using a first decoding model, obtaining a second string by using a second decoding model that uses the weighted finite state transducer model, the second string including a word sequence, which corresponds to at least one named entity and an unrecognized word sequence not identified as a named entity and output a text corresponding to the speech input by substituting the unrecognized word sequence of the second string with a word sequence included in the first string.

It is also known according to patent application US2021/0050018A1 techniques for speech recognition involving a server to identify a plurality of estimated character strings from a first character string decoded by an electronic device and transmit the second character string to the device.

It is further known from the patent application US2021/0151042A1 techniques for speech recognition involving generating a plurality of first candidate sentences by performing speech recognition, identifying a respective named entity in each of the first candidate sentences and determining whether to replace the identified named entity based on a similarity between the named entity and the standard expression corresponding to the named entity, and determining a plurality of second candidate sentences based on the determination result.

### [Disclosure]

### [Technical Problem]

Various embodiments of the disclosure provide an electronic device capable of recognizing consecutive named entities included in a user utterance, and a speech recognizing method of the electronic device.

Various embodiments of the disclosure provide an electronic device capable of recognizing a text corresponding to a named entity included in the user utterance and replacing the recognized text with a named entity corresponding to a user's intent, and a speech recognizing method of the electronic device.

The technical problems to be solved by embodiments of the disclosure are not limited to the aforementioned problems, and other technical problems that are not mentioned will be clearly understood by those skilled in the art from the following description.

### [Technical Solution]

To solve the above technical problems, the invention provides an electronic device according to claim 1 and a speech recognizing method according to claim 16. Preferable aspects are defined by the dependent claims.

### [Advantageous Effects]

According to the embodiments disclosed in this specification, consecutive named entities included in a user utterance may be recognized.

According to the embodiments disclosed in this specification, a text corresponding to the named entity included in the user utterance may be recognized, and the recognized text may be replaced with a named entity satisfying user intent.

According to the embodiments disclosed in this specification, the accuracy or performance of speech recognition may be improved by distinguishing and recognizing consecutive named entities included in the user utterance.

Besides, a variety of effects directly or indirectly understood through the disclosure may be provided.

Effects obtained in an embodiment of the disclosure are not limited to the above-mentioned effects, and other effects that are not mentioned will be clearly understood by those skilled in the art, to which the disclosure belongs, from the following description.

### [Description of Drawings]

FIG. 1 is a block diagram of an electronic device, according to an embodiment.
FIG. 2 is a block diagram of an electronic device, according to an embodiment.
FIG. 3 is a diagram for describing a named entity replacing operation of an electronic device, according to an embodiment.
FIG. 4 is a block diagram of an electronic device, according to an embodiment.
FIG. 5 is a flowchart of a speech recognizing method of an electronic device, according to an embodiment.
Fig. 6 is a block diagram illustrating an electronic device 601 in a network environment 600 according to various embodiments.
FIG. 7 is a block diagram illustrating an integrated intelligence system, according to an embodiment.
FIG. 8 is a diagram illustrating the form in which relationship information between a concept and an action is stored in a database, according to an embodiment.
FIG. 9 is a view illustrating a user terminal displaying a screen of processing a voice input received through an intelligence app, according to an embodiment.

With regard to description of drawings, the same or similar components will be marked by the same or similar reference signs.

### [Mode for Invention]

Hereinafter, an embodiment of the disclosure will be described more fully with reference to the accompanying drawings to such an extent as to be easily embodied by one skilled in the art. However, the disclosure may be embodied in many different forms and should not be construed as limited to the embodiments set forth herein. With regard to description of drawings, the same or similar components will be marked by the same or similar reference signs. Moreover, in the drawings and related descriptions, descriptions of well-known functions and configurations may be omitted for clarity and conciseness.

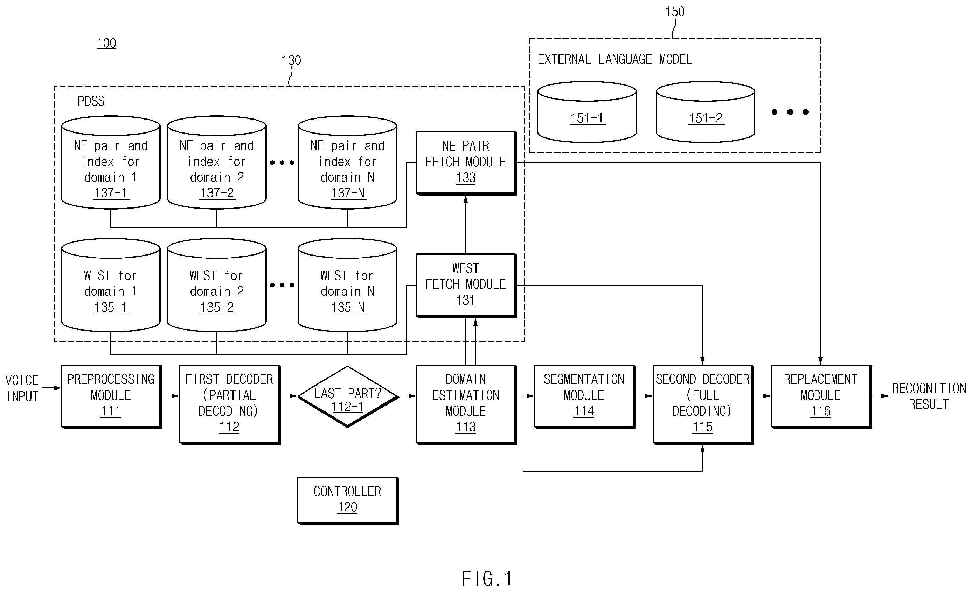

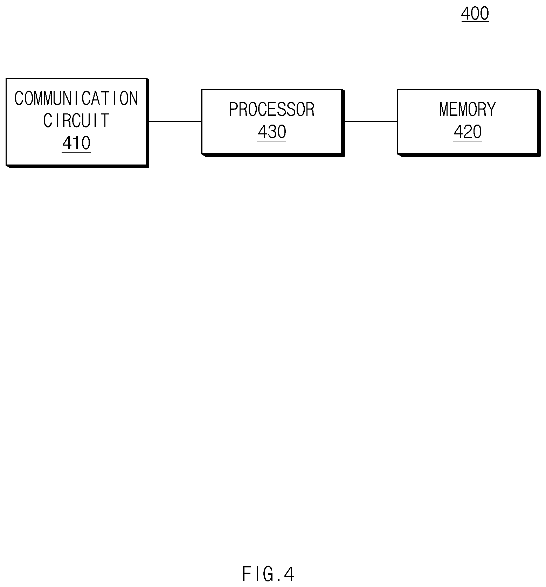

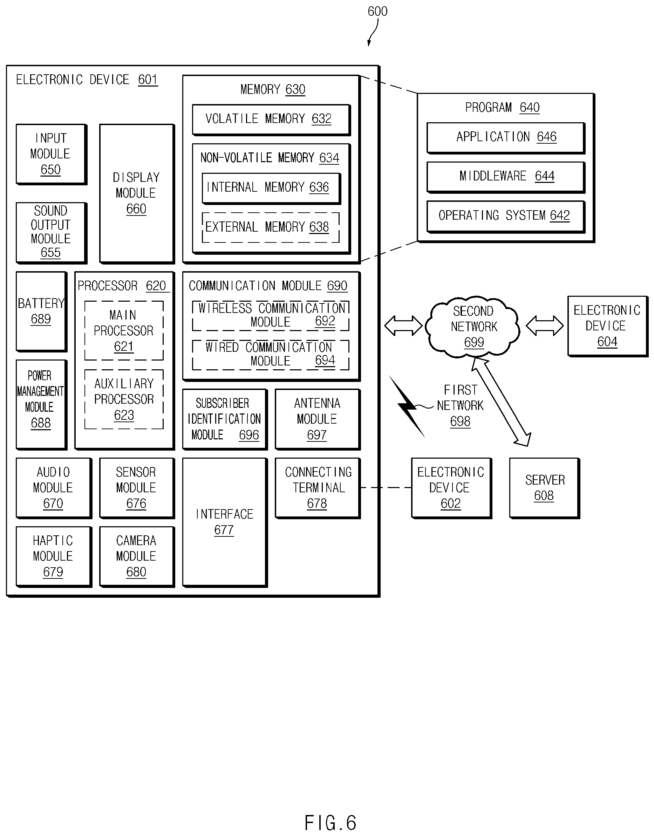

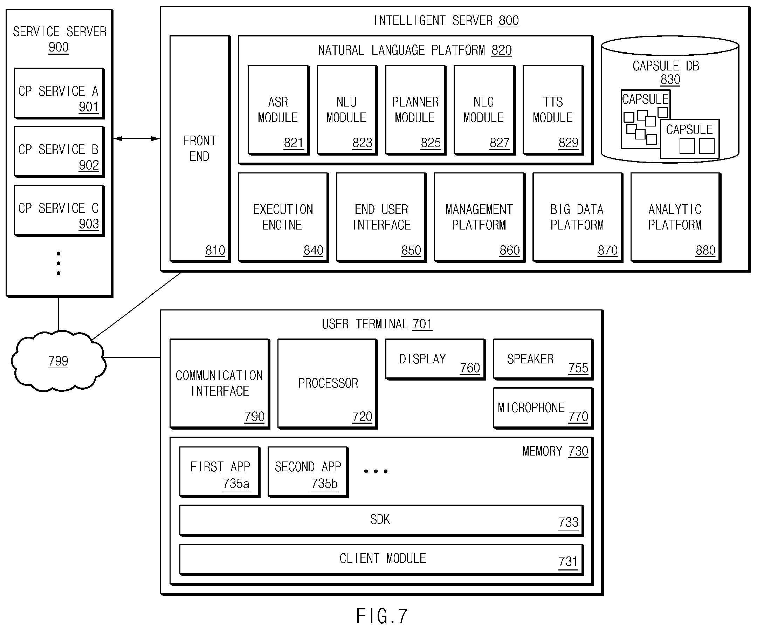

FIG. 1 is a block diagram of an electronic device, according to an embodiment. According to an embodiment, FIG. 1 shows a configuration of an electronic device 100 (e.g., an electronic device 400 in FIG. 4, an electronic device 601 in FIG. 6, a user terminal 701 in FIGS. 7 to 9, or an intelligent server 800 in FIGS. 7 to 9) implemented based on a bi-directional recurrent neural network (RNN) series model.

According to an embodiment, the electronic device 100 may include a preprocessing module 111, it includes a first decoder 112, a domain estimation module 113, it may include a segmentation module 114, it further includes a second decoder 115, a replacement module 116, and may include a controller 120. According to an embodiment, the electronic device 100 may include a personal data sync service (PDSS) 130 and/or an external language model 150. The external language model 150 may include a language model (e.g., the external language module may include, for example, a general language model (general LM) 151-1 and a music language model 151-2) corresponding to at least one domain. According to an embodiment, the PDSS 130 and/or the external language model 150 may be implemented in an external electronic device (e.g., an external server).

According to an embodiment, the preprocessing module 111 may preprocess a voice input (e.g., a voice signal according to a user utterance (for example, a voice signal representing a user utterance, wherein the voice signal is a digital signal corresponding to a user utterance received by a microphone). For example, the preprocessing module 111 may perform end point detection (EPD) of the voice signal (to determine an end point of the user utterance, for example). The preprocessing module 111 may extract a feature from the voice signal. The preprocessing module 111 may perform cepstral mean variance normalization (CMVN) based on the voice signal. For example, the CMVN may be an operation normalization technology for speech recognition, and may minimize distortion due to noise for feature extraction by linearly changing cepstral coefficients so as to have the same segment statistics.

According to an embodiment, the first decoder 112 is configured to decode at least part of the voice signal. For example, the first decoder 112 may perform automatic speech recognition (ASR) based on the voice signal. The first decoder 112 may be a decoder for neural network-based ASR. For example, the first decoder 112 may generate a speech recognition algorithm-based normalized text (e.g., text normalization (TN) text) by using the voice signal. For example, the first decoder 112 may perform decoding by using a bi-directional RNN series-based model. For example, the first decoder 112 may partially accumulate and decode the voice signal by a specified length. For example, the voice signal may be decoded in steps, wherein in each step a specified length (for example, a specific part of the voice signal corresponding to a specific length of time of the voice signal, such as 400ms to 800ms or the like) of the voice signal is decoded until the total length of the voice signal is decoded (for example, the voice signal may be decoded in first, second, and third steps). For example, when the total length of the voice signal according to a user utterance is about 1200ms and transducer series ASR is used, the first decoder 112 may generate a result of decoding the voice signal of about 0 to about 400ms by decoding the voice signal of about 0 to about 400ms by a first specified length (e.g., 400ms) in a first step, may generate a result of decoding the voice signal of about 0 to about 800ms by decoding the voice signal of about 400ms to about 800ms in a second step, and may generate a result of decoding the voice signal of about 0 to about 1200ms by decoding the voice signal of about 800ms to about 1200ms in a third step. Through accumulating (adding, concatenating, or combining) partial decoding of the first to third steps (alternatively, in another example, there may be more or less steps), the first decoder 112 may generate the result of decoding the voice signal according to the entire user utterance by accumulating partial decoding results of the first to third steps. For example, the first decoder 112 may generate the decoding results of the first step and the second step by accumulating the partial decoding result of the first step and the partial decoding result of the second step after the partial decoding of the second step, and may generate the decoding result of the voice signal according to the entire user utterance by accumulating the decoding results of the first step and the second step and the decoding result of the third step after partial decoding in the third step (that is, for example, the individual partial decoding results may be accumulated to generate the decoding result of the voice signal according to the entire user utterance (the voice signal in entirety)). The first decoder 112 may provide partial decoding results to the controller 120, and the controller 120 may provide a user with partial decoding results accumulated in each step. For example, the user may recognize a process of performing speech recognition and whether speech recognition is properly performed, through the partial decoding result.

According to an embodiment, an end-to-end (E2E) ASR method may include listen attend and spell (LAS) and transducer method, and the transformer may be implemented as an LAS structure and configured to process the entire input at once. On the other hand, the transducer may process the voice signal in units of feature. For example, when the first decoder 112 is a decoder of a transformer model of Bi-directional RNN series, the first decoder 112 may receive and process all voice signals at once. In this case, the electronic device 100 (e.g., the controller 120) may receive a voice signal according to a user utterance from an external device in units of chunks, and may accumulate and store the received voice signal in units of chunks, and may provide the voice signal of a specified unit (specified length) to the first decoder 112. For example, the chunk may mean a specified reference unit of the voice signal (or voice data) (such as a specified volume (dB) or length of time (ms)). For example, the chunk may mean a unit of a meaningful voice signal (for example, a part of the voice signal which has a recognizable significance according to a predefined parameter). For example, the first decoder 112 may perform an operation (i.e., an operation of partially decoding the voice signal according to a user utterance) such as processing the streaming voice signal by decoding the voice signal having a specified unit provided by the controller 120. According to an embodiment, because the first decoder 112 repeatedly decodes one user utterance, a module that is smaller and faster than the second decoder 115 may be used to reduce the processing time. For example, the first decoder 112 may use a model having a relatively small number of parameters among E2E ASR models. The second decoder 115 may use a model having a relatively large number of parameters. For example, the first decoder 112 may perform decoding without applying a language model.

For example, in operation 112-1, the controller 120 (or the first decoder 112) may recognize whether the first decoder 112 has performed partial decoding. For example, when completing last partial decoding of the voice signal (under control of the controller 120), the first decoder 112 may deliver the accumulated result (i.e., a result of decoding the entire voice signal) to the domain estimation module 113.

According to an embodiment, the domain estimation module 113 is configured to determine a domain corresponding to the user utterance from the decoding result of the first decoder 112 based on a predetermined keyword. The domain estimation module 113 may notify information of the determined domain to a weighted finite state transducer (WFST) fetch module 131, an NE pair fetch module 133, the segmentation module 114, and/or the controller 120.

The segmentation module 114 may receive information of the domain corresponding to the user utterance from the domain estimation module 113. For example, when the domain corresponding to the user utterance is a specified domain (e.g., multi-contact domain), the segmentation module 114 may segment a voice signal according to the user utterance into a plurality of segments. For example, the multi-contact domain may be a domain indicating that a word related to a plurality of contacts (e.g., contacts stored in a memory of the electronic device 100) is included in the user utterance.

The segmentation module 114 may perform voice activity detection (VAD) on the voice signal. For example, the segmentation module 114 may apply a VAD algorithm to the voice signal. The segmentation module 114 may segment the voice signal based on the result of performing VAD. For example, the segmentation module 114 may extract VAD information (e.g., voice existence section information) from the voice signal. For example, the VAD information may include a voice section (e.g., segment) extracted from the voice signal (for example, the voice section may be a section of the voice signal which includes a recording of a voice of a user or the user utterance). For example, the segmentation module 114 (and/or the first decoder and/or the second decoder 115) may have a mean value for each specified band (e.g., Mel filterbank) for cepstral mean and variance normalization (CMVN) operation of features of the input voice signal. When the number of bands (e.g., a filterbank band) exceeding a specified first reference value based on the mean value of each band of the specified filter is greater than or equal to a second reference value, the segmentation module 114 may determine a section of the corresponding voice signal as a voice section.

The segmentation module 114 may modify the determined segments through post-processing. For example, the segmentation module 114 may modify segments through the following operations 1) to 4). 1) When the segmentation module 114 recognizes (or identifies) a VAD result for a noise source (for example, a noise source may be recognized when the number of divided segments (or divided sections) exceeds a specified upper limit value), the segmentation module 114 may not use the corresponding VAD result. 2) To compensate for a hangover time and/or to combine adjacent segments, the segmentation module 114 may extend the starting and end sections of VAD information (raw VAD) (e.g., segments) by a specified value. 3) To prevent segments from being generated with too short sections, the segmentation module 114 may combine segments having overlapping regions into one. 4) The segmentation module 114 may recognize segments having a length less than a specified lower limit value as noise and may remove the noise.

The second decoder 115 is configured to decode the voice signal. For example, the second decoder 115 may perform ASR based on the voice signal. The second decoder 115 may be a decoder for neural network-based ASR. For example, the second decoder 115 may generate a speech recognition algorithm-based normalized text (e.g., TN text) by using the voice signal. For example, the second decoder 115 may decode the voice signal based on the segmentation result and/or language model corresponding to the determined domain. For example, when the domain estimation module 113 determines a domain corresponding to the user utterance as a contact domain (e.g., a contact domain), the second decoder 115 may receive WFST models (135-1, 135-2, ..., 135-N) for the contact domain from the WFST fetch module 131. The second decoder 115 may decode a voice signal by performing shallow fusion on the received WFST models (135-1, 135-2, ..., 135-N). For example, when the segmentation module 114 segments the voice signal into a plurality of segments, the second decoder 115 may perform shallow fusion on each divided segment by using the language model (e.g., WFST model (135-1, 135-2, ..., 135-N)). When generating the decoding result (a text corresponding to a user utterance), the second decoder 115 may add information (e.g., a specified text (e.g., <PAUSE>)) for distinguishing segments between texts corresponding to each segment. For example, the result generated by the second decoder 115 may be in a form of "yeongsang tonghwa aeb-eseo (meaning "in a video call app") <PAUSE> hong-gil-dong (meaning a person's name in Korean) <PAUSE> singihan yun-seong-ssi (meaning mysterious Mr/Mrs. Yun-seong) <PAUSE> kim-i-rang" (meaning "kim and" or "kim i-rang" in Korean) <PAUSE> yeongsangtonghwa geol-eojwo (meaning "make a video call") -9.200345". Here, "-9.200345" represents a score (e.g., degree of certainty/confidence that the result is accurate in a speech recognition model) of the speech recognition result. As the score is larger (closer to 0), it is predicted that the result may be more accurate (for example, a larger score may correspond to a more accurate result).

For example, the second decoder 115 may be implemented based on a Bi-directional RNN series model (e.g., transformer). The second decoder 115 may extract features for the entire voice signal, may calculate an encoder output once with respect to the features, and may generate word-piece outputs while repeating decoding multiple times with reference to the result. The second decoder 115 may perform a beam search to reduce the amount of computation in a decoding process. The second decoder 115 may perform shallow fusion during the beam search. The shallow fusion may refer to a method of obtaining a probability distribution combined by performing a weighted sum between a probability distribution of word-pieces from a bi-directional RNN series model (e.g., transformer) decoder operation process during the beam search process and a probability distribution obtained from the external language model 150, and performing the beam search based on the obtained probability distribution.

The segmentation module 114 and the second decoder 115 may be implemented as an integrated component. For example, when the second decoder 115 and the segmentation module 114 are implemented as one configuration (e.g., the second decoder 115), the second decoder 115 may perform an operation of the segmentation module 114.

According to an example of the embodiment, the first decoder 112 and the second decoder 115 may be implemented as one decoder. For example, the electronic device 100 may include one decoder, and the one decoder may perform operations of the first decoder 112 and the second decoder 115 described above. For example, the first decoder 112 and the second decoder 115 may be configurations obtained by logically separating operations in which the same decoder performs decoding by using different models.

The replacement module 116 is configured to replace at least part of the text related to a named entity included in a text, which is obtained as a second decoding result, with a specified named entity. The replacement module 116 may recognize an NE matching a text related to the named entity based on NE pair information (137-1, 137-2, ..., 137-N) corresponding to a domain (e.g., a contact domain), and may replace the text related to the named entity with the matched NE. For example, the replacement module 116 may determine a candidate NE based on the second decoding result. The replacement module 116 may determine a candidate NE corresponding to at least part related to the named entity included in the text based on keyword information previously indexed for each domain and/or context of the text generated as the second decoding result. The replacement module 116 may recognize the NE matching the candidate NE based on the NE pair information (137-1, 137-2, ..., 137-N). For example, when a Levenshtein distance of the NE (i.e., the NE included in the NE pair information (137-1, 137-2, ..., 137-N)) matching the candidate NE is less than or equal to a specified threshold value, the replacement module 116 may replace the candidate NE with the matched NE. For example, when the Levenshtein distance is less than or equal to the threshold value, the replacement module 116 may determine that the candidate NE corresponds to the matched NE even when the candidate NE and the matched NE are not completely the same as each other (for example, the Levenshtein distance may nonetheless indicate a high level of similarity), and may replace the candidate NE with the matched NE.

According to an embodiment, the replacement module 116 may include an NE replacer (NER) module and/or an inverse text normalization (ITN) module. For example, the NER module may recognize predefined information (e.g., a text related to a named entity) from a text input, and may replace the predefined information with an original named entity type specified by a user. For example, the predefined information may include a name registered (stored) by the user, a device name, and/or information corresponding to a command. For example, the second decoding result may be in a form of text normalization (TN). The NER module may convert a TN-type text (e.g., a text written in Korean) corresponding to predefined information into the original named entity type (e.g., a named entity including English characters, numbers, and/or symbols that the user has stored in contacts) specified by the user. The ITN module may convert the TN-type text into an ITN-type text including English characters and/or numbers. For example, the replacement module 116 may receive at least one piece of NE pair information (137-1, 137-2, ..., 137-N) about a domain from the NE pair fetch module 133. The NE pair information (137-1, 137-2, ..., 137-N) may have a form of {domain/TN/ITN}, but is not limited thereto. The NE pair information (137-1, 137-2, ..., 137-N) may include an index related to an NE pair.

According to an embodiment, when the second decoding result includes information (e.g., information indicating a section without a user voice (e.g., <PAUSE>)) for distinguishing a plurality of segments and is a text (e.g., "yeongsang tonghwa aeb-eseo hong-gil-dong singihan yun-seong-ssi kim-i-rang yeongsangtonghwa geol-eojwo" (meaning "make a video call with Hong gil-dong, mysterious Mr/Mrs. Yun-seong, and KIM in a video call app")) corresponding to a user utterance, the replacement module 116 may operate as follows. For example, when the segmentation module 114 fails to segment a voice signal, or when the segmentation module 114 does not perform a segmentation operation (e.g., when a domain is not a specified domain), the replacement module 116 may recognize a named entity by segmenting a text through the following operations.
(A) Dividing sections of a text based on <PAUSE> (information for distinguishing segments), and deleting <PAUSE>.
(B) Deleting a section related to entering a domain (e.g., "yeongsang tonghwa aeb-eseo") and a section related to command execution (e.g., "yeongsangtonghwa geol-eojwo") among the sections.
(C) Searching for NE pair information (137-1, 137-2, ..., 137-N) that matches named entity-related information (e.g., "hong-gil-dong", "singihan yun-seong-ssi", and "kim-i-rang") included in the remaining sections.
(C-1) When the matched NE pair information (137-1, 137-2, ..., 137-N) is recognized, after the named entity-related information is replaced with the matched named entity, tagging and outputting information (<ne_replacer> and </ne_replacer>) indicating that the named entity has been replaced before and after the replaced named entity.
   For example, (when "hong-gil-dong", "singihan yun-seong-ssi", and "kim-i-rang" are recognized as the matched NE) "yeongsang tonghwa aeb-eseo <ne_replacer> hong-gil-dong </ne_replacer> <ne_replacer> singihan yun-seong-ssi </ne_replacer> <ne_replacer> kim-i-rang </ne_replacer> yeongsangtonghwa geol-eojwo".
(C-2) Case that the matched NE pair information (137-1, 137-2, ..., 137-N) is not recognized.
(C-2-1) Searching for the matched NE pair information (137-1, 137-2, ..., 137-N) while the named entity-related text is divided into smaller sections in units of word spacing - when there is no NE pair information (137-1, 137-2, ..., 137-N) that matches "singihan yun-seong-ssi", searching for NE pair information (137-1, 137-2, ..., 137-N) that are matched by dividing "singihan yun-seong-ssi" into "singihan" and "yun-seong-ssi".
(C-2-1-1) When the matched NE pair information (137-1, 137-2, ..., 137-N) is recognized, the procedure proceeds in the same way as case (C-1).
   For example, (when "yun-seong-ssi" is recognized as the matched NE) "yeongsang tonghwa aeb-eseo <ne_replacer> hong-gil-dong </ne_replacer> singihan <ne_replacer> yun-seong-ssi </ne_replacer> <ne_replacer> kim-i-rang </ne_replacer> yeongsangtonghwa geol-eojwo".
(C-2-1-2) When the named entity-related text includes a linking word (when the NE pair information (137-1, 137-2, ..., 137-N) matched by (C-2-1-1) is not recognized), deleting a text (e.g., "(i)lang" (meaning "and"), "wa(gwa)" (meaning "and"), "geuligo" (meaning "and"), and "hago" (meaning "and")" in Korean) corresponding to the linking word from the named entity-related text and searching for the matched NE pair information (137-1, 137-2, ..., 137-N).

For example, generating a speech recognition result of i), ii), or iii) below with respect to the decoding result of "yeongsang tonghwa aeb-eseo <PAUSE> hong-gil-dong-gwa <PAUSE> singihan yun-seong-ssi <PAUSE> kim-i-rang <PAUSE> yeongsangtonghwa geol-eojwo".
i) (When the matched NE pair information (137-1, 137-2, ..., 137-N) is found after "gwa" is deleted from "hong-gil-dong-gwa") "yeongsang tonghwa aeb-eseo <ne_replacer> hong-gil-dong </ne_replacer> <ne_replacer> singihan yun-seong-ssi </ne_replacer> <ne_replacer> kim-i-rang </ne_replacer> yeongsangtonghwa geol-eojwo".
ii) (When the matched NE pair information (137-1, 137-2, ..., 137-N) is found after "gwa" is deleted from "hong-gil-dong-gwa" and "lang" (meaning "and") is deleted from "kim-i-rang") "yeongsang tonghwa aeb-eseo <ne_replacer> hong-gil-dong </ne_replacer> <ne_replacer> singihan yun-seong-ssi </ne_replacer> <ne_replacer> kim-i </ne_replacer> yeongsangtonghwa geol-eojwo".
iii) (When the matched NE pair information (137-1, 137-2, ..., 137-N) is found after "gwa" is deleted from "hong-gil-dong-gwa" and "i-lang" is deleted from "kim-i-rang") "yeongsang tonghwa aeb-eseo <ne_replacer> hong-gil-dong </ne_replacer> <ne_replacer> singihan yun-seong-ssi </ne_replacer> <ne_replacer> kim </ne_replacer> yeongsangtonghwa geol-eojwo".

(C-2-2) Case that <PAUSE> (information for distinguishing segments) is incorrectly detected due to characteristics of a user utterance.

(C-2-2-1) Searching for the matched NE pair information (137-1, 137-2, ..., 137-N) while linking words and/or words are deleted in a named entity-related text section.

For example, searching for the NE pair information (137-1, 137-2, ..., 137-N) matched through the following steps after the named entity-related text section ("hong-gil-dong-i-lang singihan yun-seong-ssi geuligo kim-i-rang") is recognized, with respect to the decoding result of "yeongsang tonghwa aeb-eseo <PAUSE> hong-gil-dong-i-lang singihan yun-seong-ssi geuligo kim-i-rang <PAUSE> yeongsangtonghwa geol-eojwo".
a) Searching for the NE pair information (137-1, 137-2, ..., 137-N) matched in order of "hong-gil-dong-i-lang singihan yun-seong-ssi geuligo kim-i-rang", "hong-gil-dong-i-lang singihan yun-seong-ssi geuligo kim-i", "hong-gil-dong-i-lang singihan yun-seong-ssi geuligo kim", "hong-gil-dong-i-lang singihan yun-seong-ssi geuligo", "hong-gil-dong-i-lang singihan yun-seong-ssi", "hong-gil-dong-i-lang singihan", "hong-gil-dong-i-lang", "hong-gil-dong-i", and "hong-gil-dong".
b) (Recognizing the NE pair information (137-1, 137-2, ..., 137-N) matching "hong-gil-dong") replacing the corresponding part with "<ne_replacer> hong-gil-dong </ne_replacer> i-lang".
c) Searching for a NE pair in order of "singihan yun-seong-ssi geuligo kim-i-rang", "singihan yun-seong-ssi geuligo kim-i", "singihan yun-seong-ssi geuligo kim", "singihan yun-seong-ssi geuligo", and "singihan yun-seong-ssi".
d) (Recognizing the NE pair information (137-1, 137-2, ..., 137-N) matching "singihan yun-seong-ssi") replacing the corresponding part with "<ne_replacer> singihan yun-seong-ssi </ne_replacer>".
e) Searching for the NE pair information (137-1, 137-2, ..., 137-N) matched in order of "geuligo kim i-lang", "geuligo kim-i", "geuligo kim", and "geuligo".
f) Searching for the NE pair information (137-1, 137-2, ..., 137-N) matching "kim-i-rang".
g) (Recognizing the NE pair information (137-1, 137-2, ..., 137-N) matching "kim-i-rang") replacing the corresponding part with "<ne_replacer> kim-i-rang </ne_replacer>".
h) Obtaining, as the final speech recognition result, "yeongsang tonghwa aeb-eseo <ne_replacer> hong-gil-dong </ne_replacer> i-lang <ne_replacer> singihan yun-seong-ssi </ne_replacer> geuligo <ne_replacer> kim-i-rang </ne_replacer> yeongsangtonghwa geol-eojwo".

Through operations in the steps, the replacement module 116 may generate the final speech recognition result from a text generated as the decoding result of the second decoder 115 by replacing at least part related to a named entity included in the text with a matched NE.

The controller 120 may control overall operations of the electronic device 100. For example, the controller 120 may control operations of the preprocessing module 111, the first decoder 112, the domain estimation module 113, the segmentation module 114, the second decoder 115, the replacement module 116, and/or the PDSS 130 (e.g., the NE pair fetch module 133 and the WFST fetch module 131) described above. The controller 120 may manage data (NE pair, index, and/or WFST model (135-1, 135-2, ..., 135-N)) included in the PDSS 130 and/or the external language model 150. For example, when a domain, which corresponds to a user utterance and which is determined by the domain estimation module 113, is a specified domain (e.g., a contact domain or a multi-contact domain), the controller 120 may allow the segmentation module 114 to segment a voice signal according to the user utterance, and may provide the result to the second decoder 115. When the domain is not the specified domain, the controller 120 may allow the segmentation module 114 not to segment a voice signal (i.e., not passing the voice signal through the segmentation module 114). When the domain corresponding to the user utterance is the specified domain (e.g., a contact domain or a multi-contact domain), the controller 120 may allow the WFST fetch module 131 to fetch the WFST models (135-1, 135-2, ..., 135-N) corresponding to the specified domain based on the specified domain and may provide the result to the second decoder 115. The controller 120 may allow the NE pair fetch module 133 to fetch at least one NE pair information (137-1, 137-2, ..., 137-N) corresponding to the specified domain based on the specified domain and may provide the result to the replacement module 116. When the domain corresponding to the user utterance is not the specified domain, the controller 120 may provide at least one of the external language model 150 (e.g., a general language model (general LM) 151-1) to the second decoder 115, not the WFST model (135-1, 135-2, ..., 135-N) included in the PDSS 130, and may allow the second decoder 115 to perform decoding by using at least one of the external language model 150.

The PDSS 130 may be a service that stores and fetches personal information of a user related to a specific domain including contact, music (e.g., a music title, an artist name, and/or an album name), and/or movie (e.g., a film title, an acting cast, and/or a genre). According to an embodiment, the PDSS 130 may include the at least one WFST model (135-1, 135-2, ..., 135-N), the at least one NE pair information (137-1, 137-2, ..., 137-N), the NE pair fetch module 133, and the WFST fetch module 131. For example, the NE pair information (137-1, 137-2, ..., 137-N) may include an NE pair and an index for a specific domain. For example, the NE pair may include TN information and ITN information. For example, the NE pair information (137-1, 137-2, ..., 137-N) (e.g., NE pair) may have a format of {domain/TN/ITN}. For example, the PDSS 130 may include a language model (e.g., WFST model (135-1, 135-2, ..., 135-N)) for a specific domain. The PDSS 130 may generate an index according to information change timing of a user regardless of user utterance timing by using the NE pair information (137-1, 137-2, ..., 137-N). The index refers to an operation of storing and/or managing data such that information is capable of being quickly found in accordance with the structure of a search engine (or a search module) and/or data easily stored and/or managed to search for information. For example, when the electronic device 100 uses string matching for a specific NE (e.g., candidate NE) to search for (or fetch or obtain) the NE pair information (137-1, 137-2, ..., 137-N) included in the PDSS 130, latency occurring in searching for matching the NE pair information (137-1, 137-2, ..., 137-N) may be long. When generating the NE pair information (137-1, 137-2, ..., 137-N), the PDSS 130 may generate indexes corresponding to the NE pair information (137-1, 137-2, ..., 137-N) so as to relatively quickly and easily search for the NE pair information (137-1, 137-2, ..., 137-N) (i.e. an NE that matches a candidate NE) matching a candidate NE.

The NE pair fetch module 133 may receive information of a domain corresponding to a user utterance from the domain estimation module 113. The NE pair fetch module 133 may fetch the NE pair information (137-1, 137-2, ..., 137-N) corresponding to a domain and may provide the result to the replacement module 116. For example, the NE pair fetch module 133 may recognize the NE pair information (137-1, 137-2, ..., 137-N) corresponding to the domain based on a preset index.

The WFST fetch module 131 may receive information of a domain corresponding to a user utterance from the domain estimation module 113. The WFST fetch module 131 may fetch the WFST models (135-1, 135-2, ..., 135-N) corresponding to the domain and may provide the result to the second decoder 115.

The external language model 150 may include a language model trained based on general-purpose sample data, not a language model trained based on user data of the electronic device 100. For example, the external language model 150 may include a general language model 151-1 and a language model 151-2 related to a specific domain (e.g., music).

According to the embodiment, even when a plurality of named entities are included in a user utterance, an ambiguous named entity is included in the user utterance, or the plurality of named entities are not clearly identified in the user utterance, the electronic device 100 may (nonetheless) clearly recognize the named entity included in the user utterance based on information (e.g., the NE pair information (137-1, 137-2, ..., 137-N)) related to a predetermined named entity (for example, a named entity which was recognized in a previous voice signal), thereby improving the recognition performance of a user utterance and relatively reducing word error rate (WER).

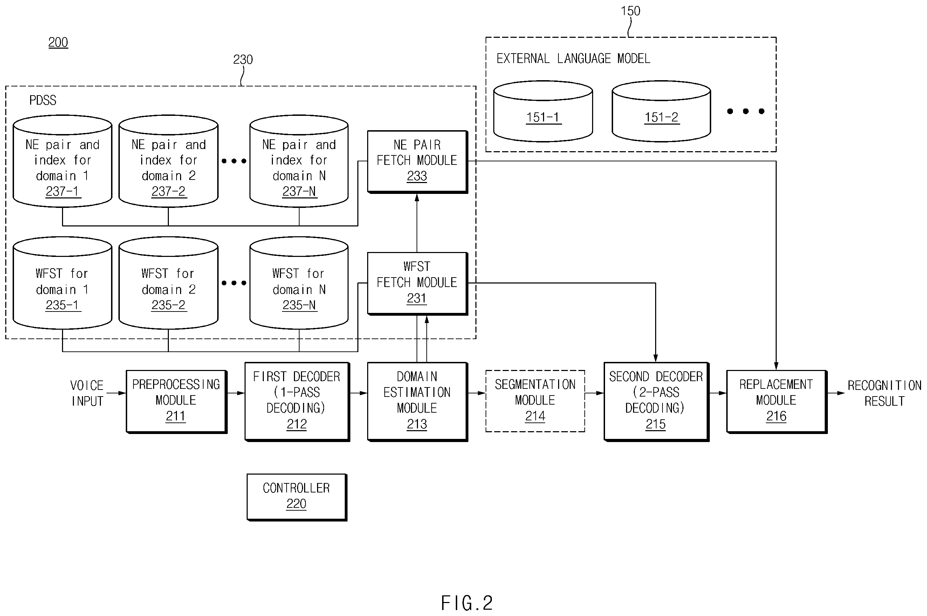

According to various embodiments, a configuration of the electronic device 100 is not limited to that shown in FIG. 1. At least some components (e.g., at least one of components of the electronic device 200 in FIG. 2, the electronic device 400 in FIG. 4, the electronic device 601 in FIG. 6, the user terminal 701 in FIG. 7, and/or the intelligent server 800 in FIG. 7) thereof may be integrated or omitted, and at least some components thereof may be added.

FIG. 2 is a block diagram of an electronic device, according to an embodiment. According to an embodiment, FIG. 2 shows a configuration of an electronic device 200 (e.g., the electronic device 400 in FIG. 4, the electronic device 601 in FIG. 6, the user terminal 701 in FIGS. 7 to 9, or the intelligent server 800 in FIGS. 7 to 9) implemented based on an RNN transducer series model. Hereinafter, descriptions identical to those of FIG. 1 will be omitted or briefly described.

The electronic device 200 may include a preprocessing module 211, it includes a first decoder 212, a domain estimation module 213, it may include a segmentation module 214, it includes a second decoder 215, a replacement module 216, and may include a controller 220. The electronic device 200 may include a PDSS 230 and/or the external language model 150. The PDSS 230 and/or the external language model 150 may be implemented in an external electronic device 200 (e.g., an external server).

According to an embodiment, the preprocessing module 211 may preprocess a voice input (e.g., a voice signal according to a user utterance). For example, the preprocessing module 211 may perform EPD of the voice signal. The preprocessing module 211 may extract a feature from the voice signal. The preprocessing module 211 may perform cepstral mean variance normalization (CMVN) based on the voice signal.

The first decoder 212 is configured to decode at least part of the voice signal. For example, the first decoder 212 may perform ASR based on the voice signal. The first decoder 212 may be a decoder for neural network-based ASR. For example, the first decoder 212 may generate a speech recognition algorithm-based normalized text (e.g., text normalization (TN) text) by using the voice signal. For example, the first decoder 212 may perform decoding without applying a language model. For example, the first decoder 212 may partially decode the voice signal by using a RNN-transducer series-based model (e.g., 1-pass ASR decoding). For example, the RNN-transducer may be capable of streaming output. For example, the first decoder 212 may partially decode the voice signal by a specified length without duplication (without accumulation). For example, when the total length of the voice signal according to the user utterance is about 1200ms, the first decoder 212 may decode a voice signal of about 0 to about 400ms by the specified length (e.g., 400ms) in a first step, may decode a voice signal of about 400ms to about 800ms in a second step, and may decode a voice signal of about 800ms to about 1200ms in a third step. The first decoder 212 may output partial decoding results of the first to third steps through streaming. For example, the voice signal may be decoded in steps, wherein in each step a specified length (for example, a specific part of the voice signal corresponding to a specific length of time of the voice signal, such as 400ms to 800ms or the like) of the voice signal is decoded until the total length of the voice signal is decoded (for example, the voice signal may be decoded in first, second, and third steps). For example, the first decoder 212 may provide partial decoding results to the controller 220, and the controller 220 may provide a user with a partial decoding result in each step. For example, the user may recognize a process of performing speech recognition and whether speech recognition is properly performed, through the partial decoding result.

The domain estimation module 213 is configured to determine a domain corresponding to the user utterance from the decoding result of the first decoder 212 based on a predetermined keyword. The domain estimation module 213 may notify information of the determined domain to a WFST fetch module 231, an NE pair fetch module 233, the segmentation module 214, and/or the controller 220.

The segmentation module 214 may receive information of a domain corresponding to a user utterance from the domain estimation module 213. For example, when the domain corresponding to the user utterance is a specified domain (e.g., multi-contact domain), the segmentation module 214 may segment the voice signal according to the user utterance into a plurality of segments.

The segmentation module 214 may recognize timestamp information corresponding to at least one word or silent section (e.g., a silent section between consecutive words included in the voice signal) included in the voice signal. For example, when the electronic device 200 uses an RNN-transducer based model, the segmentation module 214 may segment the voice signal based on timestamp information stored in word-piece units (e.g., a word piece; for example, a length of the voice signal that corresponds to a single word) of voice signal during voice signal processing based on the RNN-transducer series-based model. For example, the segmentation module 214 may recognize that a difference in timestamp values between two word-pieces continuously output from the voice signal is greater than or equal to a specified time, and may segment the voice signal (i.e., between two word-pieces) based on the corresponding point. For example, the segmentation module 214 may segment the voice signal into a plurality of segments based on a location at which a timestamp value difference in the voice signal is greater than or equal to the specified time. For example, the segmentation module 214 may segment the voice signal and may provide the result to the second decoder 215.

The segmentation module 214 may perform at least part of operations of the segmentation module 114 of FIG. 1.

The second decoder 215 is configured to decode the voice signal. For example, the second decoder 215 may perform ASR based on the voice signal. The second decoder 215 may be a decoder for neural network-based ASR. For example, the second decoder 215 may generate a speech recognition algorithm-based normalized text (e.g., TN text) by using the voice signal. For example, the second decoder 215 may decode the voice signal based on the segmentation result and/or language model corresponding to the determined domain (2-pass decoding). For example, when the domain estimation module 213 determines a domain corresponding to the user utterance as a contact domain, the second decoder 215 may receive WFST models (235-1, 235-2, ..., 235-N) for the contact domain from the WFST fetch module 231. For example, when generating the decoding result (a text corresponding to a user utterance), the second decoder 215 may add information (e.g., a specified text (e.g., <PAUSE>)) for distinguishing segments between texts corresponding to each segment. For example, the result generated by the second decoder 115 may be in a form of "yeongsang tonghwa aeb-eseo <PAUSE> hong-gil-dong <PAUSE> singihan yun-seong-ssi <PAUSE> kim-i-rang" <PAUSE> yeongsangtonghwa geol-eojwo -9.200345". Here, "-9.200345" represents a score (e.g., degree of certainty/confidence that the result is accurate in a speech recognition model) of the speech recognition result. As the score is larger (closer to 0), it is predicted that the result may be more accurate (for example, a larger score may correspond to a more accurate result).

For example, the second decoder 215 may perform decoding based on RNN-transducer series model (e.g., transformer) and/or LAS rescoring model. For example, the RNN-transducer model may include an encoder (or a transcription network), a prediction network corresponding to the language model, and a joint network that integrates results of the encoder and the prediction network. The RNN-transducer end-to end (E2E) model may obtain a decoding value by processing the output of a joint network through a softmax function. The LAS rescoring model may output the decoded result rescored through additional decoding (e.g., LAS decoding) based on the partial decoding result and encoder result from the RNN-transducer model. According to an embodiment, the replacement module 216 may perform at least part of operations of the replacement module 116 of FIG. 1.

The segmentation module 214 and the second decoder 215 may be implemented as an integrated component. For example, when the second decoder 215 and the segmentation module 214 are implemented as one configuration (e.g., the second decoder 215), the second decoder 215 may perform an operation of the segmentation module 214.

The first decoder 212 and the second decoder 215 may be implemented as one decoder. For example, the electronic device 200 may include one decoder, and the one decoder may perform operations of the first decoder 212 and the second decoder 215 described above. For example, the first decoder 212 and the second decoder 215 may be configurations obtained by logically separating operations in which the same decoder performs decoding by using different models.

The replacement module 216 is configured to replace at least part of the text related to a named entity included in a text, which is obtained as the second decoding result, with a specified named entity. The replacement module 216 may recognize an NE matching a text related to the named entity based on NE pair information (237-1, 237-2, ..., 237-N) corresponding to a domain (e.g., a contact domain), and may replace the text related to the named entity with the matched NE. For example, the replacement module 216 may determine a candidate NE based on the second decoding result. The replacement module 216 may determine a candidate NE corresponding to at least part related to the named entity included in the text based on keyword information previously indexed for each domain and/or context of the text generated as the second decoding result. The replacement module 216 may recognize the NE matching the candidate NE based on the NE pair information (237-1, 237-2, ..., 237-N). For example, when a Levenshtein distance of the NE (i.e., the NE included in the NE pair information (237-1, 237-2, ..., 237-N)) matching the candidate NE is less than or equal to a specified threshold value, the replacement module 216 may replace the candidate NE with the matched NE. For example, when the Levenshtein distance is less than or equal to the threshold value, the replacement module 216 may determine that the candidate NE corresponds to the matched NE even when the candidate NE and the matched NE are not completely the same as each other (for example, the Levenshtein distance may nonetheless indicate a high level of similarity), and may replace the candidate NE with the matched NE.

The replacement module 216 may include an NE replacer (NER) module and/or an inverse text normalization (ITN) module. For example, the NER module may recognize predefined information (e.g., a text related to a named entity) from a text input, and may replace the predefined information with an original named entity type specified by a user. For example, the predefined information may include a name registered (stored) by the user, a device name, and/or information corresponding to a command. For example, the second decoding result may be in a form of text normalization (TN). The NER module may convert a TN-type text (e.g., a text written in Korean) corresponding to predefined information into the original named entity type (e.g., a named entity including English characters, numbers, and/or symbols that the user has stored in contacts) specified by the user. The ITN module may convert the TN-type text into an ITN-type text including English characters, symbols, and/or numbers. For example, the replacement module 216 may receive at least one piece of NE pair information (237-1, 237-2, ..., 237-N) about a domain from the NE pair fetch module 233. The NE pair information (237-1, 237-2, ..., 237-N) may have a form of {domain/TN/ITN}, but is not limited thereto. The NE pair information (237-1, 237-2, ..., 237-N) may include an index related to an NE pair.

According to the embodiment, when the segmentation module 214 fails to segment a voice signal, or when the segmentation module 214 does not perform a segmentation operation (e.g., when a domain is not a specified domain), the replacement module may divide a text into segments related to the named entity based on the second decoding result, may determine whether there is a matched named entity in the segmented segments (for example, it may be determined whether a named entity matching the at least one candidate named entity exists), and may replace the text related to the named entity in the segments with the matched named entity. According to an embodiment, the replacement module 216 may perform at least part of operations of the replacement module 116 of FIG. 1.

The controller 220 may control overall operations of the electronic device 200. For example, the controller 220 may control operations of the preprocessing module 211, the first decoder 212, the domain estimation module 213, the segmentation module 214, the second decoder 215, the replacement module 216, and/or the PDSS 230 (e.g., the NE pair fetch module 233 and the WFST fetch module 231) described above. The controller 220 may manage data (NE pair, index, and/or WFST model (235-1, 235-2, ..., 235-N)) included in the PDSS 230 and/or the external language model 150. For example, when a domain, which corresponds to a user utterance and which is determined by the domain estimation module 213, is a specified domain (e.g., a contact domain or a multi-contact domain), the controller 220 may allow the segmentation module 214 to segment a voice signal according to the user utterance. When the domain is not the specified domain, the controller 220 may allow the segmentation module 214 not to segment the voice signal (i.e., not passing through the segmentation module 214) and may provide the result to the second decoder 215. When the domain corresponding to the user utterance is the specified domain (e.g., a contact domain or a multi-contact domain), the controller 220 may allow the WFST fetch module 231 to fetch the WFST models (235-1, 235-2, ..., 235-N) corresponding to the specified domain based on the specified domain and may provide the result to the second decoder 215. The controller 220 may allow the NE pair fetch module 233 to fetch at least one NE pair information (237-1, 237-2, ..., 237-N) corresponding to the specified domain based on the specified domain and may provide the result to the replacement module 216. When the domain corresponding to the user utterance is not the specified domain, the controller 220 may provide at least one of the external language model 150 (e.g., a general LM) to the second decoder 215, not (instead of) the WFST model (235-1, 235-2, ..., 235-N) included in the PDSS 230, and may allow the second decoder 215 to perform decoding by using at least one of the external language model 150.

The PDSS 230 may be a service that stores and fetches personal information of a user related to a specific domain including contact (e.g., contact information such as a name, a telephone number, an email address, a social media username, or the like), music (e.g., a music title, an artist name, and/or an album name), and/or movie (e.g., a film title, an acting cast, and/or a genre). The PDSS 230 may include the at least one WFST model (235-1, 235-2, ..., 235-N), the at least one NE pair information (237-1, 237-2, ..., 237-N), the NE pair fetch module, and the WFST fetch module 231. For example, the NE pair information (237-1, 237-2, ..., 237-N) may include an NE pair and an index for a specific domain. For example, the NE pair may include TN information and ITN information. For example, the NE pair information (237-1, 237-2, ..., 237-N) (e.g., NE pair) may have a format of {domain/TN/ITN}. For example, the PDSS 230 may include a language model (e.g., WFST model (235-1, 235-2, ..., 235-N)) for a specific domain. The PDSS 230 may generate an index according to information change timing of a user regardless of user utterance timing by using the NE pair information (237-1, 237-2, ..., 237-N). The index refers to an operation of storing and/or managing data such that information (or data) is capable of being quickly found in accordance with the structure of a search engine (or a search module) and/or data (or information) is easily stored and/or managed to search for information. For example, when the electronic device 200 uses string matching for a specific NE (e.g., candidate NE) to search for (or fetch) the NE pair information (237-1, 237-2, ..., 237-N) included in the PDSS 230, latency occurring in searching for matching the NE pair information (237-1, 237-2, ..., 237-N) may be long (for example, the time elapsed between a query and a result may be long when string matching is used, and thus a long latency may occur). When generating the NE pair information (237-1, 237-2, ..., 237-N), the PDSS 230 may generate indexes corresponding to the NE pair information (237-1, 237-2, ..., 237-N) so as to relatively quickly and easily search for the NE pair information (237-1, 237-2, ..., 237-N) (i.e. an NE that matches a candidate NE) matching a candidate NE.

The NE pair fetch module 233 may receive information of a domain corresponding to a user utterance from the domain estimation module 213. The NE pair fetch module 233 may fetch (or retrieve or obtain) the NE pair information (237-1, 237-2, ..., 237-N) corresponding to a domain and may provide the result to the replacement module 216. For example, the NE pair fetch module 233 may recognize (or identify) the NE pair information (237-1, 237-2, ..., 237-N) corresponding to the domain based on a preset index.

The WFST fetch module 231 may receive (or obtain) information of a domain corresponding to a user utterance from the domain estimation module 213. The WFST fetch module 231 may fetch the WFST models (235-1, 235-2, ..., 235-N) corresponding to the domain and may provide the result to the second decoder 215.

The external language model 150 may include a language model trained based on general-purpose sample data, not a language model trained based on user data of the electronic device 200. For example, the external language model 150 may include a general language model 151-1 and a language model 151-2 related to a specific domain (e.g., music).

According to the embodiment, even when a plurality of named entities are included in a user utterance, an ambiguous named entity is included in the user utterance, or the plurality of named entities are not clearly identified in the user utterance, the electronic device 200 may (nonetheless) clearly recognize the named entity included in the user utterance based on information (e.g., the NE pair information (237-1, 237-2, ..., 237-N)) related to a predetermined named entity, thereby improving the recognition performance of a user utterance and reducing word error rate (WER).

The configuration of the electronic device 200 is not limited to that shown in FIG. 2. At least some components (e.g., at least one of components of the electronic device 100 in FIG. 1, the electronic device 400 in FIG. 4, the electronic device 601 in FIG. 6, the user terminal 701 in FIG. 7, and/or the intelligent server 800 in FIG. 7) thereof may be integrated or omitted, and at least some components thereof may be added.

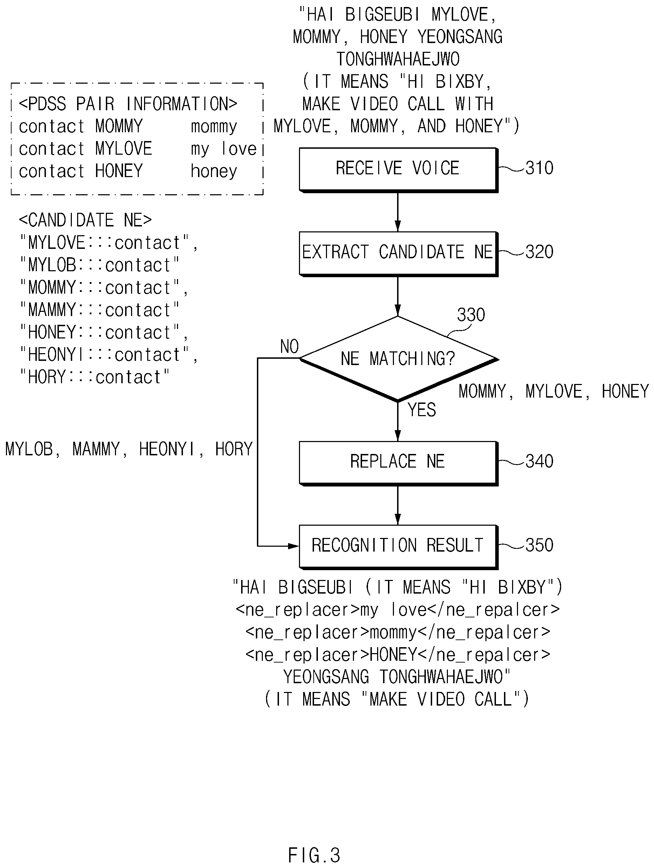

FIG. 3 is a diagram for describing a named entity replacing operation of an electronic device, according to an embodiment.

Hereinafter, each of operations in an embodiment may be sequentially performed, but are not necessarily sequentially performed. For example, the order of operations may be changed, and at least two operations may be performed in parallel.

According to an embodiment, it may be understood that operations 310 to 350 are performed by a processor (e.g., the controller 120 in FIG. 1, the controller 220 in FIG. 2, a processor 430 in FIG. 4, a processor 320 in FIG. 6, or a processor 720 in FIG. 7) of an electronic device (e.g., the electronic device 100 in FIG. 1, the electronic device 200 in FIG. 2, the electronic device 400 in FIG. 4, the electronic device 601 in FIG. 6, the user terminal 701 in FIGS. 7 to 9, or the intelligent server 800 in FIGS. 7 to 9).

In operation 310, an electronic device (e.g., the electronic device 100 in FIG. 1, the electronic device 200 in FIG. 2, the electronic device 400 in FIG. 4, the electronic device 601 in FIG. 6, the user terminal 701 in FIGS. 7 to 9, or the intelligent server 800 in FIGS. 7 to 9) may receive a voice signal according to a user utterance (e.g., "hai bigseubi MYLOVE MOMMY HONEY yeongsang tonghwahaejwo"(meaning "Hi Bixby, make a video call with MYLOVE, MOMMY, and HONEY"). For example, the user utterance may include a wake-up word (e.g., "hai bigseubi" (meaning "Hi Bixby") for activating a voice assistant system. For example, the user utterance may include information corresponding to at least one contact (for example, a contact stored in a memory of the electronic device, wherein the contact includes information such as a name, telephone number, email address, social media username or the like). For example, the user utterance may include at least one named entity (NE) (e.g., "MYLOVE", "MOMMY", and "HONEY"). The electronic device may obtain a text corresponding to the user utterance from a voice signal through speech recognition.

In operation 320, the electronic device may extract a candidate NE from the voice signal (or a text obtained from the voice signal). For example, the electronic device may extract the candidate NE related to a contact domain. For example, the electronic device may extract the candidate NE capable of being inferred as a named entity included in the user utterance, based on the result of recognizing the user utterance. For example, the electronic device may extract "MYLOVE", "MYLOB", "MOMMY", "MAMMY", "HONEY", "HEONYI", and "HONY", which are the same as or similar to each of "MYLOVE", "MOMMY", and "HONEY" included in the user utterance, as the candidate NE related to the user utterance.

In operation 330, the electronic device may determine (or identify) whether there is a named entity matching the candidate NE, based on information related to a predetermined named entity. For example, the information related to the predetermined named entity may include PDSS pair information. The PDSS pair information may include domain information, TN information, and/or ITN information, which is associated with the named entity. For example, the PDSS pair information may have a format of {domain/TN/ITN}. The electronic device may determine whether there is an NE included in the PDSS pair information among the candidate NE. For example, referring to FIG. 3, the PDSS pair information may include {contact, MOMMY, mommy}, {contact, MYLOVE, my love}, and {contact, HONEY, honey}. In this case, the electronic device may recognize that the NE (e.g., "MOMMY", "MYLOVE", and "HONEY") included in the PDSS pair information is present in the candidate NE. When there is a named entity matching the candidate NE (operation 330 - YES), the electronic device may perform operation 340. When there is no named entity matching the candidate NE (operation 330 - NO), the electronic device may omit operation 340 of replacing the NE.

In operation 340, the electronic device may replace the NE. For example, the electronic device may replace at least one of named entities included in the user utterance with the matched NE. For example, in the text corresponding to the user utterance, the electronic device may replace "MOMMY" with "mommy", may replace "MYLOVE" with "my love", and may replace "HONEY" with "honey".

In operation 350, the electronic device may generate the result of recognizing the user utterance. For example, the electronic device may generate a text (e.g., "hai bigseubi <ne_replacer> my love </ne_replacer> <ne_replacer> mommy </ne_replacer> <ne_replacer> honey </ne_replacer> yeongsang tonghwahaejwo") corresponding to the result of recognizing user utterance. For example, <ne_replacer> and </ne_replacer> may be texts indicating the start and end of the replaced named entity, respectively. The electronic device may replace the named entity (e.g., a named entity corresponding to TN included in PDSS pair information) recognized from the user utterance with the matched named entity (e.g., a named entity corresponding to ITN included in PDSS pair information). For example, in operation 330, when it is determined that there is no matched NE (e.g., when the user utterance includes "MYLOB", "MAMMY", "HEONYI", or "HONY"), the electronic device may generate a speech recognition result without replacing the corresponding named entity (e.g., "MYLOB", "MAMMY", "HEONYI", or "HONY") with another named entity. For example, when the user utterance is an utterance of "hai bigseubi MYLOB MAMMY HEONYI HONY yeongsang tonghwahaejwo", the electronic device may generate a text of "hai bigseubi MYLOB MAMMY HEONYI HONY yeongsang tonghwahaejwo" as a speech recognition result (i.e., the result of recognizing the user utterance).

FIG. 4 is a block diagram of an electronic device, according to an embodiment.

The electronic device 400 (e.g., the electronic device 100 in FIG. 1, the electronic device 200 in FIG. 2, the electronic device 601 in FIG. 6, the user terminal 701 in FIGS. 7 to 9, or the intelligent server 800 in FIGS. 7 to 9) may include a communication circuit 410 (e.g., a communication module 690 in FIG. 6 or a communication interface 790 in FIG. 7), a memory 420 (e.g., a memory 630 of FIG. 6 or a memory 730 of FIG. 7), and a processor 430 (e.g., the controller 120 in FIG. 1, the controller 220 in FIG. 2, the processor 620 in FIG. 6, the processor 720 in FIG. 7, or the natural language platform 820).

The communication circuit 410 may transmit/receive data and/or information with an external device.

The memory 420 is configured to store instructions that, when executed by the processor 220, cause the processor 430 to control an operation of the electronic device 400. The memory 420 may store information and/or data related to an operation of the electronic device 400. For example, the memory 420 may store at least one language model. For example, the language model may relate to at least one domain (e.g., a general domain and/or a specific domain (e.g., a contact-related domain)). The memory 420 may store a voice signal according to a user utterance and/or information (e.g., a timestamp of a voice signal or a silent section) related to a voice signal. The memory 420 may store information (e.g., PDSS pair) related to a named entity. According to an embodiment, the memory 420 may include NE pair information, a WFST model, and/or a language model of FIG. 1. The memory 420 may include NE pair information, a WFST model, and/or a language model of FIG. 2.

The processor 430 may receive a voice signal according to a user utterance from an external device (such as a server, for example) through the communication circuit 410. Alternatively or additionally, the processor 430 may receive a voice signal according to a user utterance through a microphone (not shown) of the electronic device 400. For example, the user utterance may include at least one word related to a contact. The user utterance may include a wake-up word for activating a voice assistant system and/or a command for requesting an operation of a specific device.

The processor 430 is configured to perform first decoding on at least part of the voice signal. For example, the processor 430 may generate a text corresponding to the user utterance by performing the first decoding on at least part of the voice signal. For example, the first decoding may include an operation of converting the voice signal according to the user utterance into the text. For example, the processor 430 may perform the first decoding on the user utterance in units of specified time (for example, milliseconds, seconds, etc.) and/or length (for example, a specified portion of the voice signal, such as a fifth of the length of the signal). The processor 430 may perform the first decoding by accumulating the user utterance in units of specified time and/or length. For example, the processor 430 may perform the first decoding on the entire user utterance at once.

The processor 430 may pre-process the voice signal before the first decoding. For example, the processor 430 may perform EPD of the voice signal. The processor 430 may recognize an end point of the voice signal (i.e., the user utterance) (for example, a point at which the user utterance ends) through preprocessing, thereby increasing speech recognition performance (e.g., accuracy) of the user utterance and/or computational efficiency.

The processor 430 may provide a user with a text, which corresponds to at least part of the voice signal and which is generated as the first decoding result. The processor 430 may output the generated text through a display or a speaker. For example, the processor 430 may provide the user with the text generated as the first decoding result such that the user perceives whether the speech recognition of the user utterance has been properly performed (for example, the user may be able to check that the text generated as the first decoding result is accurate to their intention. That is, the user may be able to check for errors in the generated text such as a misinterpreted word or the like).

The processor 430 is configured to determine a domain corresponding to the user utterance based at least partly on the first decoding result. The processor 430 may determine whether the domain corresponding to the user utterance includes a contact domain (e.g., a contact domain) and/or a multi-contact domain (e.g., multi-contact domain). For example, the processor 430 may recognize whether the domain corresponding to the user utterance is the multi-contact domain (e.g., a multi-contact domain). For example, the contact domain may be a domain corresponding to a case that the user utterance includes at least one piece of contact information. The multi-contact domain may be a domain corresponding to a case that the user utterance includes pieces of contact information (such as a name, telephone number, email address, social media username, or the like).

The processor 430 may segment the voice signal into a plurality of segments based on the determined domain. For example, at least part of the plurality of segments may be related to a contact (e.g., a named entity). According to an embodiment, the processor 430 may perform voice activity detection (VAD) on the voice signal and may segment the voice signal based on the VAD result. For example, the processor 430 may detect and/or remove a sound (e.g., a silence sound and/or a noise signal) other than the user's voice from the voice signal according to the user utterance through VAD. The processor 430 may recognize a section corresponding to the user's voice from the voice signal and may segment the voice signal based on the recognized section.

The processor 430 may recognize timestamp information corresponding to at least one word included in the voice signal. The processor 430 may segment the voice signal based on a timestamp value difference between consecutive words included in the voice signal. For example, when the timestamp value difference between consecutive words is greater than or equal to a specified value, the processor 430 may distinguish between corresponding words.

According to the embodiment, when the determined domain is a domain related to a plurality of contacts (e.g., multi-contact), the processor 430 may segment the voice signal into a plurality of segments. When the determined domain is not a domain related to the plurality of contacts, the processor 430 may not segment the voice signal.

The processor 430 is configured to perform second decoding on the voice signal based on the language model corresponding to the determined domain, possibly based on the segmented result. For example, the language model may include at least one WFST model. For example, the WFST model may include a language model related to a contact (and/or multiple contacts) domain. For example, the processor 430 may generate a WFST model trained for a specific domain. The processor 430 may train the WFST model based on user data related to a specific domain. The processor 430 may generate a text corresponding to a user utterance by performing the second decoding on the voice signal. For example, when segmenting the voice signal, the processor 430 may generate a text, which corresponds to a voice signal and which includes information for distinguishing a plurality of segments, through the second decoding. For example, the information for distinguishing the segments may be information indicating a space (e.g., a silent section without the user's voice) between words in a text corresponding to the user utterance.

For example, the processor 430 may fetch (or retrieve or obtain) a WFST model and/or NE pair information from a PDSS including at least one WFST model and at least one NE pair information. The PDSS may be a service that stores and fetches (or retrieves or obtains) personal information of a user related to a specific domain including contact (e.g., a name, a telephone number, an email address, or a social media username or the like), music (e.g., a music title, an artist name, and/or an album name), and/or movie (e.g., a film title, an acting cast, and/or a genre). The PDSS may include NE pair information including TN information and ITN information. The NE pair information may have a format of {domain/TN/ITN}.

The processor 430 is configured to replace at least part of a text**,** possibly corresponding to a plurality of segments**,** with a named entity (NE) based on the second decoding result. For example, the processor 430 may determine at least one candidate named entity (candidate NE) based on the second decoding result. For example, the processor 430 may determine at least one candidate NE that is the same as or similar to a contact-related word included in the user utterance. The processor 430 may determine whether there is a named entity which matches at least one candidate named entity based on information (e.g., NE pair information) related to a predetermined named entity. The processor 430 may replace at least one candidate named entity with the matched named entity based at least partly on the determination that there is a named entity that matches at least one candidate named entity. When there is NE pair information (e.g., a named entity matching a candidate NE included in NE pair information) matching the candidate NE, the processor 430 may replace the candidate NE with the NE included in the NE pair information. For example, the processor 430 may determine a Levenshtein distance between at least one candidate named entity and the matched named entity. When the Levenshtein distance is less than or equal to a predetermined threshold value, the processor 430 may replace at least one candidate named entity with the matched named entity (for example, the Levenshtein distance may nonetheless indicate a high level of similarity). According to an embodiment, when failing to recognize the named entity (e.g., NE pair information) matching at least one candidate named entity, the processor 430 may divide at least part of a text corresponding to a plurality of segments into a plurality of word units. The processor 430 may determine whether there is a named entity matching at least one word unit of the plurality of word units (divided word), based on information (e.g., NE pair information) related to a predetermined named entity. For example, the processor 430 may search for NE pair information that matches the text corresponding to the segmented segment. When there is no NE pair information matching the text corresponding to the segment, the processor 430 may segment the text corresponding to the segment into a plurality of word units, and may determine whether there is NE pair information matching at least one word unit of the plurality of word units (divided word). When the NE pair information matching the divided word is present, the processor 430 may replace the at least one word unit of the plurality of word units (divided word) with the NE included in the matched NE pair information. According to an embodiment, when there is no named entity (e.g., NE pair information) matching the at least one word unit of the plurality of word units (divided word), the processor 430 may delete a text corresponding to a linking word from the at least one word unit of the plurality of word units (divided word). The processor 430 may recognize whether there is a named entity (e.g., NE pair information) that matches the word from which the text corresponding to the linking word is deleted. When the named entity that matches the word, from which the text corresponding to the linking word is deleted, is present, the processor 430 may replace the word, from which the text corresponding to the linking word is deleted, with the matched named entity. According to an embodiment, when failing to recognize the named entity matching the word, from which the text corresponding to the linking word is deleted, the processor 430 may not perform an operation of replacing at least part of the text corresponding to the user utterance with a specified named entity (e.g., the matched named entity).

The processor 430 is configured to recognize a user utterance based at least partly on the replacement result. For example, the processor 430 may recognize consecutive named entities included in the user utterance. For example, the processor 430 may generate a text, which is obtained by replacing at least part of the text, which corresponds to the user utterance and which is generated as the second decoding result, with the specified named entity (e.g., the matched named entity included in NE pair information). The electronic device 400 may recognize the user utterance based on the generated text.

According to the embodiment, even when a plurality of named entities are included in a user utterance, an ambiguous named entity is included in the user utterance, or the plurality of named entities are not clearly identified in the user utterance, the electronic device 400 may clearly recognize the named entity included in the user utterance based on information (e.g., the NE pair information) related to a predetermined named entity, thereby improving the recognition performance of a user utterance and reducing word error rate (WER).

The processor 430 may be integrated with at least part of the preprocessing module 111, the first decoder 112, the domain estimation module 113, the segmentation module 114, the second decoder 115, the replacement module 116, the controller 120, and the PDSS 130 of the electronic device 100 in FIG. 1, or may perform at least part of operations of the preprocessing module 111, the first decoder 112, the domain estimation module 113, the segmentation module 114, the second decoder 115, the replacement module 116, the controller 120, and the PDSS 130. Alternatively or additionally, the processor 430 may be integrated with at least part of the preprocessing module 211, the first decoder 212, the domain estimation module 213, the segmentation module 214, the second decoder 215, the replacement module 216, the controller 220, and the PDSS 230 of the electronic device 200 in FIG. 2, or may perform at least part of operations of the preprocessing module 211, the first decoder 212, the domain estimation module 213, the segmentation module 214, the second decoder 215, the replacement module 216, the controller 220, and the PDSS 230 of the electronic device 200.

The configuration of the electronic device 400 is not limited to that shown in FIG. 4, and at least some configurations (e.g., the configuration of the electronic device 100 in FIG. 1, the electronic device 200 in FIG. 2, the electronic device 601 in FIG. 6, the user terminal 701 in FIGS. 7 to 9, or the intelligent server 800 in FIGS. 7 to 9) may be further added. For example, the electronic device may further include a microphone (e.g., an input module 650 in FIG. 6 or a microphone 770 in FIG. 7), a speaker (e.g., a sound output module 655 in FIG. 6 or a speaker 755 in FIG. 7), and/or a display (e.g., a display module 660 in FIG. 6 or a display 770 in FIG. 7). The microphone may obtain a voice signal according to a user utterance. The speaker may output an audio signal (e.g., an audio signal corresponding to information (e.g., a text generated as the speech recognition result) generated by processing the voice signal according to the user utterance). The display may visually output information (e.g., a text generated as the speech recognition result) generated by processing the voice signal according to the user utterance.

According to an embodiment, an electronic device includes a communication circuit, a memory, and a processor. According to an embodiment, the processor may be configured to receive a voice signal according to a user utterance from an external device. According to an embodiment, the processor is configured to perform first decoding on at least part of the voice signal. According to an embodiment, the processor is configured to determine a domain corresponding to the user utterance based at least partly on the first decoding result. According to an embodiment, the processor may be configured to segment the voice signal into a plurality of segments. According to an embodiment, the processor is configured to perform second decoding on the voice signal**,** possibly based on the segmented result, and a language model corresponding to the determined domain. According to an embodiment, the processor is configured to replace at least part of a text, possibly corresponding to the plurality of segments**,** with a named entity (NE) based on the second decoding result. According to an embodiment, the processor is configured to generate a speech recognition result based at least partly on the replacement result.

According to an embodiment, the processor may be configured to segment the voice signal into a plurality of segments when the determined domain is a domain related to a plurality of contacts.

According to an embodiment, the processor may be configured to perform the second decoding without segmenting the voice signal when the determined domain is not a domain related to a plurality of contacts.

According to an embodiment, the processor may be configured to determine at least one candidate named entity based on the second decoding result.

According to an embodiment, the processor may be configured to determine whether there is a named entity matching the at least one candidate named entity, based on information related to a predetermined named entity (for example, it may be determined whether a named entity matching the at least one candidate named entity exists).

According to an embodiment, the processor may be configured to replace the at least one candidate named entity with the matched named entity based at least partly on the determination that there is the named entity matching the at least one candidate named entity.

According to an embodiment, the information related to the predetermined named entity may include domain information, text normalization (TN) information, and inverse text normalization (ITN) information, which correspond to one another.

According to an embodiment, the processor may be configured to determine a Levenshtein distance between the at least one candidate named entity and the matched named entity.

According to an embodiment, the processor may be configured to replace the at least one candidate named entity with the matched named entity when the Levenshtein distance is less than or equal to a predetermined threshold value.

According to an embodiment, the processor may be configured to divide at least part of the text corresponding to the plurality of segments into a plurality of word units when failing to recognize a named entity matching the at least one candidate named entity.

According to an embodiment, the processor may be configured to determine whether there is a named entity matching the at least one word unit of the plurality of word units (divided word), based on the information related to the predetermined named entity.

According to an embodiment, the processor may be configured to delete a text corresponding to a linking word from the at least one word unit of the plurality of word units (divided word) when there is no named entity matching the at least one word unit of the plurality of word units (divided word).

According to an embodiment, the processor may be configured to determine whether there is a named entity matching at least one word unit of the plurality of word units, from which the text corresponding to the linking word is deleted.

According to an embodiment, the language model may include at least one weighted finite state transducer (WFST) model.

According to an embodiment, the processor may be configured to provide a user with a text, which corresponds to at least part of the voice signal and which is generated as the first decoding result.

According to an embodiment, the processor may be configured to preprocess the voice signal before the first decoding. According to an embodiment, the preprocessing may include end point detection (EPD) of the voice signal.

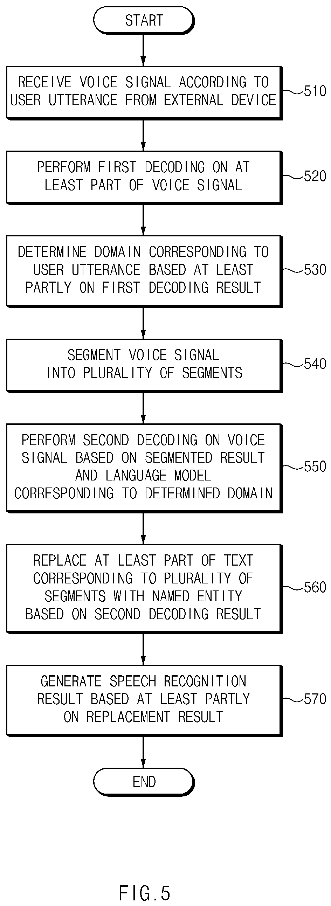

FIG. 5 is a flowchart of a speech recognizing method of an electronic device, according to an embodiment.

It may be understood that operations 510 to 570 are performed by a processor (e.g., the controller 120 in FIG. 1, the controller 220 in FIG. 2, a processor 430 in FIG. 4, a processor 320 in FIG. 6, or a processor 720 in FIG. 7) of an electronic device (e.g., the electronic device 100 in FIG. 1, the electronic device 200 in FIG. 2, the electronic device 400 in FIG. 4, the electronic device 601 in FIG. 6, the user terminal 701 in FIGS. 7 to 9, or the intelligent server 800 in FIGS. 7 to 9).

In operation 510, an electronic device (e.g., the electronic device 100 in FIG. 1, the electronic device 200 in FIG. 2, the electronic device 400 in FIG. 4, the electronic device 601 in FIG. 6, the user terminal 701 in FIGS. 7 to 9, or the intelligent server 800 in FIGS. 7 to 9) may receive a voice signal according to a user utterance from an external device. For example, the user utterance may include at least one word related to a contact. The user utterance may include a wake-up word for activating a voice assistant system and/or a command for requesting an operation of a specific device.

In operation 520, the electronic device is configured to perform first decoding on at least part of the voice signal. For example, the electronic device may generate a text corresponding to the user utterance by performing the first decoding on at least part of the voice signal. For example, the first decoding may include an operation of converting the voice signal according to the user utterance into the text. For example, the electronic device may perform the first decoding on the user utterance in units of specified time and/or length. The electronic device may perform the first decoding by accumulating the user utterance in units of specified time and/or length. For example, the electronic device may perform the first decoding on the entire user utterance at once.

The electronic device may pre-process the voice signal before the first decoding. For example, the electronic device may perform EPD of the voice signal. The electronic device may recognize an end point of the voice signal (i.e., a user utterance) through preprocessing, thereby improving speech recognition performance (e.g., accuracy) of the user utterance and/or computational efficiency.

The electronic device may provide a user with a text, which corresponds to at least part of the voice signal and which is generated as the first decoding result. The electronic device may output the generated text through a display or a speaker. For example, the electronic device may provide the user with the text generated as the first decoding result such that the user perceives whether the speech recognition of the user utterance has been properly performed (for example, the user may be able to check that the text generated as the first decoding result is accurate to their intention. That is, the user may be able to check for errors in the generated text such as a misinterpreted word or the like).

In operation 530, the electronic device is configured to determine a domain corresponding to the user utterance based at least partly on the first decoding result. The electronic device may determine whether a domain corresponding to the user utterance includes a contact domain. For example, the electronic device may recognize whether the domain corresponding to the user utterance is a multi-contact domain (e.g., a multi-contact domain).

In operation 540, the electronic device may segment the voice signal into a plurality of segments based on the determined domain. For example, at least part of the plurality of segments may be related to a contact (e.g., a named entity). According to an embodiment, the electronic device may perform voice activity detection (VAD) on the voice signal and may segment the voice signal based on the VAD result. For example, the electronic device may detect and/or remove a sound (e.g., a silence sound and/or noise signal) other than the user's voice from the voice signal according to the user utterance through VAD. The electronic device may recognize a section corresponding to the user's voice from the voice signal and may segment the voice signal based on the recognized section.

The electronic device may recognize timestamp information corresponding to at least one word included in the voice signal. The electronic device may segment the voice signal based on a timestamp value difference between consecutive words included in the voice signal. For example, when the timestamp value difference between consecutive words is greater than or equal to a specified value, the electronic device may distinguish between corresponding words.

The electronic device may segment the voice signal into a plurality of segments based on the determined domain. For example, when the domain determined in operation 530 is a domain related to a plurality of contacts, the electronic device may segment the voice signal into a plurality of segments in operation 540. When the determined domain is not a domain related to the plurality of contacts, the electronic device may omit operation 540 and may not segment the voice signal.

In operation 550, the electronic device is configured to perform second decoding on the voice signal, possibly based on the segmented result and the language model corresponding to the determined domain. For example, the language model may include at least one WFST model. For example, the WFST model may include a language model related to a contact (and/or multiple contacts) domain. For example, the electronic device may generate a WFST model trained for a specific domain. The electronic device may train the WFST model based on user data related to a specific domain. The electronic device may generate a text corresponding to a user utterance by performing the second decoding on the voice signal. For example, when segmenting the voice signal, the electronic device may generate a text, which corresponds to a voice signal and which includes information for distinguishing a plurality of segments, through the second decoding. For example, the information for distinguishing the segments may be information indicating a space (e.g., a silent section without the user's voice) between words in a text corresponding to the user utterance.

For example, the electronic device may fetch a WFST model and/or NE pair information from PDSS including at least one WFST model and at least one NE pair information. For example, the PDSS may include a database or server located inside or outside the electronic device. The PDSS may be a service that stores and fetches personal information of a user related to a specific domain including contact (e.g., a name, a telephone number, an email address, a social media username, or the like), music (e.g., a music title, an artist name, and/or an album name), and/or movie (e.g., a film title, an acting cast, and/or a genre). The PDSS may include NE pair information including TN information and ITN information. The NE pair information may have a format of {domain/TN/ITN}. The PDSS may generate an index according to information change timing of a user regardless of user utterance timing by using the NE pair information. The index refers to an operation of storing and/or managing data such that information is capable of being quickly found in accordance with the structure of a search engine (or a search module) and/or data easily stored and/or managed to search for information. For example, when the electronic device uses string matching for a specific NE (e.g., candidate NE) to search for (or fetch or retrieve or obtain) the NE pair information included in the PDSS, latency occurring in searching for matching the NE pair information may be long. When generating the NE pair information, the PDSS may generate indexes corresponding to the NE pair information so as to quickly and easily search for the NE pair information matching a candidate NE.

In operation 560, the electronic device is configured to replace at least part of a text corresponding to a plurality of segments with a named entity (NE) based on the second decoding result. For example, the electronic device may determine at least one candidate named entity (candidate NE) based on the second decoding result. For example, the electronic device may determine at least one candidate NE that is the same as or similar to a contact-related word included in the user utterance. The electronic device may determine whether there is a named entity which matches at least one candidate named entity (for example, it may be determined whether a named entity matching the at least one candidate named entity exists) based on information (e.g., NE pair information) related to a predetermined named entity. The electronic device may replace at least one candidate named entity with the matched named entity based at least partly on the determination that there is a named entity that matches at least one candidate named entity. For example, the electronic device may recognize (or fetch) NE pair information matching the candidate NE from the PDSS by using the indexes. When there is NE pair information (e.g., a named entity matching a candidate NE included in NE pair information) matching the candidate NE, the electronic device may replace the candidate NE with the NE included in the NE pair information. For example, the electronic device may determine a Levenshtein distance between at least one candidate named entity and the matched named entity. When the Levenshtein distance is less than or equal to a predetermined threshold value, the electronic device may replace at least one candidate named entity with the matched named entity. According to an embodiment, when failing to recognize the named entity (e.g., NE pair information) matching at least one candidate named entity, the electronic device may divide at least part of a text corresponding to a plurality of segments into a plurality of word units. The electronic device may determine whether there is a named entity matching the at least one word unit of the plurality of word units (divided word), based on information (e.g., NE pair information) related to a predetermined named entity. For example, the electronic device may search for NE pair information that matches the text corresponding to the segmented segment. When there is no NE pair information matching the text corresponding to the segment, the electronic device may segment the text corresponding to the segment into a plurality of word units, and may determine whether there is NE pair information matching the at least one word unit of the plurality of word units (divided word). When the NE pair information matching the at least one word unit of the plurality of word units (divided word) is present, the electronic device may replace the at least one word unit of the plurality of word units (divided word) with the NE included in the matched NE pair information. According to an embodiment, when there is no named entity (e.g., NE pair information) matching the at least one word unit of the plurality of word units (divided word), the electronic device may delete a text corresponding to a linking word from the at least one word unit of the plurality of word units (divided word). The electronic device may recognize whether there is a named entity (e.g., NE pair information) that matches the word from which the text corresponding to the linking word is deleted. When the named entity that matches the word, from which the text corresponding to the linking word is deleted, is present, the electronic device may replace the word, from which the text corresponding to the linking word is deleted, with the matched named entity. According to the embodiment, when failing to recognize the named entity matching the word, from which the text corresponding to the linking word is deleted, the electronic device may not perform an operation of replacing at least part of the text corresponding to the user utterance with a specified named entity (e.g., the matched named entity).

In operation 570, the electronic device is configured to generate a speech recognition result based at least partly on the replacement result. For example, the electronic device may recognize consecutive named entities included in the user utterance. For example, the electronic device may generate a text, which is obtained by replacing at least part of the text, which corresponds to the user utterance and which is generated as the second decoding result, with the specified named entity (e.g., the matched named entity included in NE pair information) The electronic device may generate a speech recognition result based on the generated text. The electronic device may output a speech recognition result. The electronic device may provide a user with the speech recognition result.

According to various embodiments, operations illustrated in FIG. 5 may be sequentially performed, but is not necessarily sequentially performed. For example, at least some of the operations shown in FIG. 5 may be performed in parallel, or the order of operations may be changed. At least some of the operations may be omitted, or at least some of the operations of the electronic device disclosed in this specification may be added.

According to an embodiment, even when a plurality of named entities are included in a user utterance, an ambiguous named entity is included in the user utterance, or the plurality of named entities are not clearly identified in the user utterance, a speech recognizing method of an electronic device may clearly recognize the named entity included in the user utterance based on information (e.g., the NE pair information) related to a predetermined named entity, thereby improving the recognition performance of a user utterance and reducing word error rate (WER).

According to an embodiment, the speech recognizing method of the electronic device may include receiving a voice signal according to a user utterance from an external device. According to an embodiment, the method includes performing first decoding on at least part of the voice signal. According to an embodiment, the method includes determining a domain corresponding to the user utterance based at least partly on the first decoding result. According to an embodiment, the method may include segmenting the voice signal into a plurality of segments. According to an embodiment, the method includes performing second decoding on the voice signal, possibly based on the segmented result, and a language model corresponding to the determined domain. According to an embodiment, the method includes replacing at least part of a text resulting from the second decoding, possibly corresponding to the plurality of segments , with an NE based on the second decoding result. According to an embodiment, the method includes generating a speech recognition result based at least partly on the replacement result.

According to an embodiment, the segmenting may include performing VAD on the voice signal. According to an embodiment, the segmenting may include segmenting the voice signal based on the VAD result.

According to an embodiment, the segmenting may include recognizing timestamp information corresponding to at least one of at least one word or at least one silent section included in the voice signal. According to an embodiment, the segmenting may include segmenting the voice signal based on a timestamp value difference between consecutive words included in the voice signal.

According to an embodiment, the method may further include generating a text, which corresponds to the voice signal and includes information for distinguishing the plurality of segments, through the second decoding when segmenting the voice signal.

According to an embodiment, the replacing may include determining at least one candidate named entity based on the second decoding result. According to an embodiment, the replacing may include determining whether there is a named entity matching the at least one candidate named entity, based on information related to a predetermined named entity. According to an embodiment, the replacing may include replacing the at least one candidate named entity with the matched named entity based at least partly on the determination that there is the named entity matching the at least one candidate named entity.

According to an embodiment, the method may further include dividing at least part of the text corresponding to the plurality of segments into a plurality of word units when failing to recognize a named entity matching the at least one candidate named entity. According to an embodiment, the method may further include determining whether there is a named entity matching the at least one word unit of the plurality of word units (divided word), based on the information related to the predetermined named entity.

According to an embodiment, the method may further include deleting a text corresponding to a linking word from the at least one word unit of the plurality of word units (divided word) when there is no named entity matching the at least one word unit of the plurality of word units (divided word). According to an embodiment, the method may further include determining whether there is a named entity matching a word, from which the text corresponding to the linking word is deleted.

According to an embodiment, a recording medium may store a program and/or instructions that, when executed by an electronic device (e.g., a processor of an electronic device), causes the electronic device to perform the method (e.g., speech recognizing method).

Fig. 6 is a block diagram illustrating an electronic device 601 in a network environment 600 according to various embodiments. Referring to Fig. 6, the electronic device 601 in the network environment 600 may communicate with an electronic device 602 via a first network 698 (e.g., a short-range wireless communication network), or at least one of an electronic device 604 or a server 608 via a second network 699 (e.g., a long-range wireless communication network). According to an embodiment, the electronic device 601 may communicate with the electronic device 604 via the server 608. According to an embodiment, the electronic device 601 may include a processor 620, memory 630, an input module 650, a sound output module 655, a display module 660, an audio module 670, a sensor module 676, an interface 677, a connecting terminal 678, a haptic module 679, a camera module 680, a power management module 688, a battery 689, a communication module 690, a subscriber identification module(SIM) 696, or an antenna module 697. In some embodiments, at least one of the components (e.g., the connecting terminal 678) may be omitted from the electronic device 601, or one or more other components may be added in the electronic device 601. In some embodiments, some of the components (e.g., the sensor module 676, the camera module 680, or the antenna module 697) may be implemented as a single component (e.g., the display module 660).

The processor 620 may execute, for example, software (e.g., a program 640) to control at least one other component (e.g., a hardware or software component) of the electronic device 601 coupled with the processor 620, and may perform various data processing or computation. According to one embodiment, as at least part of the data processing or computation, the processor 620 may store a command or data received from another component (e.g., the sensor module 676 or the communication module 690) in volatile memory 632, process the command or the data stored in the volatile memory 632, and store resulting data in non-volatile memory 634. According to an embodiment, the processor 620 may include a main processor 621 (e.g., a central processing unit (CPU) or an application processor (AP)), or an auxiliary processor 623 (e.g., a graphics processing unit (GPU), a neural processing unit (NPU), an image signal processor (ISP), a sensor hub processor, or a communication processor (CP)) that is operable independently from, or in conjunction with, the main processor 621. For example, when the electronic device 601 includes the main processor 621 and the auxiliary processor 623, the auxiliary processor 623 may be adapted to consume less power than the main processor 621, or to be specific to a specified function. The auxiliary processor 623 may be implemented as separate from, or as part of the main processor 621.

The auxiliary processor 623 may control at least some of functions or states related to at least one component (e.g., the display module 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). According to an embodiment, the auxiliary processor 623 (e.g., an image signal processor or a communication processor) may be implemented as part of another component (e.g., the camera module 680 or the communication module 690) functionally related to the auxiliary processor 623. According to an embodiment, the auxiliary processor 623 (e.g., the neural processing unit) may include a hardware structure specified for artificial intelligence model processing. An artificial intelligence model may be generated by machine learning. Such learning may be performed, e.g., by the electronic device 601 where the artificial intelligence is performed or via a separate server (e.g., the server 608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 630 may store various data used by at least one component (e.g., the processor 620 or the sensor module 676) of the electronic device 601. The various data may include, for example, software (e.g., the program 640) and input data or output data for a command related thererto. The memory 630 may include the volatile memory 632 or the non-volatile memory 634.

The program 640 may be stored in the memory 630 as software, and may include, for example, an operating system (OS) 642, middleware 644, or an application 646.

The input module 650 may receive a command or data to be used by another component (e.g., the processor 620) of the electronic device 601, from the outside (e.g., a user) of the electronic device 601. The input module 650 may include, for example, a microphone, a mouse, a keyboard, a key (e.g., a button), or a digital pen (e.g., a stylus pen).

The sound output module 655 may output sound signals to the outside of the electronic device 601. The sound output module 655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 660 may visually provide information to the outside (e.g., a user) of the electronic device 601. The display module 660 may include, for example, a display, a hologram device, or a projector and control circuitry to control a corresponding one of the display, hologram device, and projector. According to an embodiment, the display module 660 may include a touch sensor adapted to detect a touch, or a pressure sensor adapted to measure the intensity of force incurred by the touch.

The audio module 670 may convert a sound into an electrical signal and vice versa. According to an embodiment, the audio module 670 may obtain the sound via the input module 650, or output the sound via the sound output module 655 or a headphone of an external electronic device (e.g., an electronic device 602) directly (e.g., wiredly) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. According to an embodiment, the sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device (e.g., the electronic device 602) directly (e.g., wiredly) or wirelessly. According to an embodiment, the interface 677 may include, for example, a high definition multimedia interface (HDMI), a universal serial bus (USB) interface, a secure digital (SD) card interface, or an audio interface.

A connecting terminal 678 may include a connector via which the electronic device 601 may be physically connected with the external electronic device (e.g., the electronic device 602). According to an embodiment, the connecting terminal 678 may include, for example, a HDMI connector, a USB connector, a SD card connector, or an audio connector (e.g., a headphone connector).

The haptic module 679 may convert an electrical signal into a mechanical stimulus (e.g., a vibration or a movement) or electrical stimulus which may be recognized by a user via his tactile sensation or kinesthetic sensation. According to an embodiment, the haptic module 679 may include, for example, a motor, a piezoelectric element, or an electric stimulator.

The camera module 680 may capture a still image or moving images. According to an embodiment, the camera module 680 may include one or more lenses, image sensors, image signal processors, or flashes.

The power management module 688 may manage power supplied to the electronic device 601. According to one embodiment, the power management module 688 may be implemented as at least part of, for example, a power management integrated circuit (PMIC).

The battery 689 may supply power to at least one component of the electronic device 601. According to an embodiment, the battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the application processor (AP)) and supports a direct (e.g., wired) communication or a wireless communication. According to an embodiment, the communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BluetoothTM, wireless-fidelity (Wi-Fi) direct, or infrared data association (IrDA)) or the second network 699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The wireless communication module 692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 692 may support a high-frequency band (e.g., the mmWave band) to achieve, e.g., a high data transmission rate. The wireless communication module 692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 692 may support various requirements specified in the electronic device 601, an external electronic device (e.g., the electronic device 604), or a network system (e.g., the second network 699). According to an embodiment, the wireless communication module 692 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 697 may transmit or receive a signal or power to or from the outside (e.g., the external electronic device) of the electronic device 601. According to an embodiment, the antenna module 697 may include an antenna including a radiating element composed of a conductive material or a conductive pattern formed in or on a substrate (e.g., a printed circuit board (PCB)). According to an embodiment, the antenna module 697 may include a plurality of antennas (e.g., array antennas). In such a case, at least one antenna appropriate for a communication scheme used in the communication network, such as the first network 698 or the second network 699, may be selected, for example, by the communication module 690 (e.g., the wireless communication module 692) from the plurality of antennas. The signal or the power may then be transmitted or received between the communication module 690 and the external electronic device via the selected at least one antenna. According to an embodiment, another component (e.g., a radio frequency integrated circuit (RFIC)) other than the radiating element may be additionally formed as part of the antenna module 697.

According to various embodiments, the antenna module 697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 601 and the external electronic device 604 via the server 608 coupled with the second network 699. Each of the electronic devices 602 or 604 may be a device of a same type as, or a different type, from the electronic device 601. According to an embodiment, all or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 601. The electronic device 601 may provide the outcome, with or without further processing of the outcome, as at least part of a reply to the request. To that end, a cloud computing, distributed computing, mobile edge computing (MEC), or client-server computing technology may be used, for example. The electronic device 601 may provide ultra low-latency services using, e.g., distributed computing or mobile edge computing. In another embodiment, the external electronic device 604 may include an internet-of-things (IoT) device. The server 608 may be an intelligent server using machine learning and/or a neural network. According to an embodiment, the external electronic device 604 or the server 608 may be included in the second network 699. The electronic device 601 may be applied to intelligent services (e.g., smart home, smart city, smart car, or healthcare) based on 5G communication technology or IoT-related technology.

FIG. 7 is a block diagram illustrating an integrated intelligence system, according to an embodiment.

Referring to FIG. 7, an integrated intelligence system according to an embodiment may include a user terminal 701, an intelligence server 800, and a service server 900.

The user terminal 701 according to an embodiment may be a terminal device (or an electronic device) capable of connecting to Internet, and may be, for example, a mobile phone, a smartphone, a personal digital assistant (PDA), a notebook computer, a television (TV), a household appliance, a wearable device, a head mounted display (HMD), or a smart speaker.

According to the illustrated embodiment, the user terminal 701 may include a communication interface 790, a microphone 770, a speaker 755, a display 760, a memory 730, or a processor 720. The listed components may be operatively or electrically connected to one another.

The communication interface 790 according to an embodiment may be connected to an external device and may be configured to transmit or receive data to or from the external device. The microphone 770 according to an embodiment may receive a sound (e.g., a user utterance) to convert the sound into an electrical signal. The speaker 755 according to an embodiment may output the electrical signal as sound (e.g., voice). The display 760 according to an embodiment may be configured to display an image or a video. The display 760 according to an embodiment may display the graphic user interface (GUI) of the running app (or an application program).

The memory 730 according to an embodiment may store a client module 731, a software development kit (SDK) 733, and a plurality of apps 835. The client module 731 and the SDK 733 may constitute a framework (or a solution program) for performing general-purposed functions. Furthermore, the client module 731 or the SDK 733 may constitute the framework for processing a voice input.

The plurality of apps 735 may be programs for performing a specified function. According to an embodiment, the plurality of apps 735 may include a first app 735a and/or a second app 735_3. According to an embodiment, each of the plurality of apps 735 may include a plurality of actions for performing a specified function. For example, the apps may include an alarm app, a message app, and/or a schedule app. According to an embodiment, the plurality of apps 735 may be executed by the processor 720 to sequentially execute at least part of the plurality of actions.

According to an embodiment, the processor 720 may control overall operations of the user terminal 701. For example, the processor 720 may be electrically connected to the communication interface 790, the microphone 770, the speaker 755, and the display 760 to perform a specified operation. For example, the processor 720 may include at least one processor.

Moreover, the processor 720 according to an embodiment may execute the program stored in the memory 730 so as to perform a specified function. For example, according to an embodiment, the processor 720 may execute at least one of the client module 731 or the SDK 733 so as to perform a following operation for processing a voice input. The processor 720 may control operations of the plurality of apps 735 via the SDK 733. The following actions described as the actions of the client module 731 or the SDK 733 may be the actions performed by the execution of the processor 720.

According to an embodiment, the client module 731 may receive a voice input. For example, the client module 731 may receive a voice signal corresponding to a user utterance detected through the microphone 770. The client module 731 may transmit the received voice input (e.g., a voice input) to the intelligence server 800. The client module 731 may transmit state information of the user terminal 701 to the intelligence server 800 together with the received voice input. For example, the state information may be execution state information of an app.

According to an embodiment, the client module 731 may receive a result corresponding to the received voice input. For example, when the intelligence server 800 is capable of calculating the result corresponding to the received voice input, the client module 731 may receive the result corresponding to the received voice input. The client module 731 may display the received result on the display 760.

According to an embodiment, the client module 731 may receive a plan corresponding to the received voice input. The client module 731 may display, on the display 760, a result of executing a plurality of actions of an app depending on the plan. For example, the client module 731 may sequentially display the result of executing the plurality of actions on a display. For another example, the user terminal 701 may display only a part of results (e.g., a result of the last action) of executing the plurality of actions, on the display.

According to an embodiment, the client module 731 may receive a request for obtaining information necessary to calculate the result corresponding to a voice input, from the intelligence server 800. According to an embodiment, the client module 731 may transmit the necessary information to the intelligence server 800 in response to the request.

According to an embodiment, the client module 731 may transmit, to the intelligence server 800, information about the result of executing a plurality of actions depending on the plan. The intelligence server 800 may identify that the received voice input is correctly processed, using the result information.

According to an embodiment, the client module 731 may include a speech recognition module. According to an embodiment, the client module 731 may recognize a voice input for performing a limited function, via the speech recognition module. For example, the client module 731 may launch an intelligence app for processing a specific voice input by performing an organic action, in response to a specified voice input (e.g., wake up!).

According to an embodiment, the intelligence server 800 may receive information associated with a user's voice input from the user terminal 701 over a communication network 799. According to an embodiment, the intelligence server 800 may convert data associated with the received voice input to text data. According to an embodiment, the intelligence server 800 may generate at least one plan for performing a task corresponding to the user's voice input, based on the text data.

According to an embodiment, the plan may be generated by an artificial intelligent (AI) system. The AI system may be a rule-based system, or may be a neural network-based system (e.g., a feedforward neural network (FNN) and/or a recurrent neural network (RNN)). Alternatively, the AI system may be a combination of the above-described systems or an AI system different from the above-described system. According to an embodiment, the plan may be selected from a set of predefined plans or may be generated in real time in response to a user's request. For example, the AI system may select at least one plan of the plurality of predefined plans.

According to an embodiment, the intelligence server 800 may transmit a result according to the generated plan to the user terminal 701 or may transmit the generated plan to the user terminal 701. According to an embodiment, the user terminal 701 may display the result according to the plan, on a display. According to an embodiment, the user terminal 701 may display a result of executing the action according to the plan, on the display.

The intelligence server 800 according to an embodiment may include a front end 810, a natural language platform 820, a capsule database 830, an execution engine 840, an end user interface 850, a management platform 860, a big data platform 870, or an analytic platform 880.

According to an embodiment, the front end 810 may receive a voice input received from the user terminal 701. The front end 810 may transmit a response corresponding to the voice input to the user terminal 701.

According to an embodiment, the natural language platform 820 may include an automatic speech recognition (ASR) module 821, a natural language understanding (NLU) module 823, a planner module 825, a natural language generator (NLG) module 827, and/or a text to speech module (TTS) module 829.

According to an embodiment, the ASR module 821 may convert the voice input received from the user terminal 701 into text data. According to an embodiment, the NLU module 823 may grasp the intent of the user, using the text data of the voice input. For example, the NLU module 823 may grasp the intent of the user by performing syntactic analysis or semantic analysis. According to an embodiment, the NLU module 823 may grasp the meaning of words extracted from the voice input by using linguistic features (e.g., syntactic elements) such as morphemes or phrases and may determine the intent of the user by matching the grasped meaning of the words to the intent.

According to an embodiment, the planner module 825 may generate the plan by using a parameter and the intent that is determined by the NLU module 823. According to an embodiment, the planner module 825 may determine a plurality of domains necessary to perform a task, based on the determined intent. The planner module 825 may determine a plurality of actions included in each of the plurality of domains determined based on the intent. According to an embodiment, the planner module 825 may determine the parameter necessary to perform the determined plurality of actions or a result value output by the execution of the plurality of actions. The parameter and the result value may be defined as a concept of a specified form (or class). As such, the plan may include the plurality of actions and/or a plurality of concepts, which are determined by the intent of the user. The planner module 825 may determine the relationship between the plurality of actions and the plurality of concepts stepwise (or hierarchically). For example, the planner module 825 may determine the execution sequence of the plurality of actions, which are determined based on the user's intent, based on the plurality of concepts. In other words, the planner module 825 may determine an execution sequence of the plurality of actions, based on the parameters necessary to perform the plurality of actions and the result output by the execution of the plurality of actions. Accordingly, the planner module 825 may generate a plan including information (e.g., ontology) about the relationship between the plurality of actions and the plurality of concepts. The planner module 825 may generate the plan, using information stored in the capsule DB 830 storing a set of relationships between concepts and actions.

According to an embodiment, the NLG module 827 may change specified information into information in a text form. The information changed to the text form may be in the form of a natural language speech. The TTS module 829 according to an embodiment may change information in the text form to information in a voice form.

According to an embodiment, all or part of the functions of the natural language platform 820 may be also implemented in the user terminal 701.

The capsule DB 830 may store information about the relationship between the actions and the plurality of concepts corresponding to a plurality of domains. According to an embodiment, the capsule may include a plurality of action objects (or action information) and concept objects (or concept information) included in the plan. According to an embodiment, the capsule DB 830 may store the plurality of capsules in a form of a concept action network (CAN). According to an embodiment, the plurality of capsules may be stored in the function registry included in the capsule DB 830.

The capsule DB 830 may include a strategy registry that stores strategy information necessary to determine a plan corresponding to a voice input. When there are a plurality of plans corresponding to the voice input, the strategy information may include reference information for determining one plan. According to an embodiment, the capsule DB 830 may include a follow-up registry that stores information of the follow-up action for suggesting a follow-up action to the user in a specified context. For example, the follow-up action may include a follow-up utterance. According to an embodiment, the capsule DB 830 may include a layout registry storing layout information of information output via the user terminal 701. According to an embodiment, the capsule DB 830 may include a vocabulary registry storing vocabulary information included in capsule information. According to an embodiment, the capsule DB 830 may include a dialog registry storing information about dialog (or interaction) with the user. The capsule DB 830 may update an object stored via a developer tool. For example, the developer tool may include a function editor for updating an action object or a concept object. The developer tool may include a vocabulary editor for updating a vocabulary. The developer tool may include a strategy editor that generates and registers a strategy for determining the plan. The developer tool may include a dialog editor that creates a dialog with the user. The developer tool may include a follow-up editor capable of activating a follow-up target and editing the follow-up utterance for providing a hint. The follow-up target may be determined based on a target, the user's preference, or an environment condition, which is currently set. The capsule DB 830 according to an embodiment may be also implemented in the user terminal 701.

According to an embodiment, the execution engine 840 may calculate a result by using the generated plan. The end user interface 850 may transmit the calculated result to the user terminal 701. Accordingly, the user terminal 701 may receive the result and may provide the user with the received result. According to an embodiment, the management platform 860 may manage information used by the intelligence server 800. According to an embodiment, the big data platform 870 may collect data of the user. According to an embodiment, the analytic platform 880 may manage quality of service (QoS) of the intelligence server 800. For example, the analytic platform 880 may manage the component and processing speed (or efficiency) of the intelligence server 800.

According to an embodiment, the service server 900 may provide the user terminal 701 with a specified service (e.g., ordering food or booking a hotel). According to an embodiment, the service server 900 may be a server operated by the third party. According to an embodiment, the service server 900 may provide the intelligence server 800 with information for generating a plan corresponding to the received voice input. The provided information may be stored in the capsule DB 830. Furthermore, the service server 900 may provide the intelligence server 800 with result information according to the plan.

In the above-described integrated intelligence system, the user terminal 701 may provide the user with various intelligent services in response to a user input. The user input may include, for example, an input through a physical button, a touch input, or a voice input.

According to an embodiment, the user terminal 701 may provide a speech recognition service via an intelligence app (or a speech recognition app) stored therein. In this case, for example, the user terminal 701 may recognize a user utterance or a voice input, which is received via the microphone, and may provide the user with a service corresponding to the recognized voice input.

According to an embodiment, the user terminal 701 may perform a specified action, based on the received voice input, independently, or together with the intelligence server 800 and/or the service server 900. For example, the user terminal 701 may launch an app corresponding to the received voice input and may perform the specified action via the executed app.

According to an embodiment, when providing a service together with the intelligence server 800 and/or the service server 900, the user terminal 701 may detect a user utterance by using the microphone 770 and may generate a signal (or voice data) corresponding to the detected user utterance. The user terminal may transmit the voice data to the intelligence server 800 by using the communication interface 790.

According to an embodiment, the intelligence server 800 may generate a plan for performing a task corresponding to the voice input or the result of performing an action depending on the plan, as a response to the voice input received from the user terminal 701. For example, the plan may include a plurality of actions for performing the task corresponding to the voice input of the user and/or a plurality of concepts associated with the plurality of actions. The concept may define a parameter to be input upon executing the plurality of actions or a result value output by the execution of the plurality of actions. The plan may include relationship information between the plurality of actions and/or the plurality of concepts.

According to an embodiment, the user terminal 701 may receive the response by using the communication interface 790. The user terminal 701 may output the voice signal generated in the user terminal 701 to the outside by using the speaker 755 or may output an image generated in the user terminal 701 to the outside by using the display 760.

In FIG. 7, it is described that speech recognition of a voice input received from the user terminal 701, understanding and generating a natural language, and calculating a result by using a plan are performed on the intelligence server 800. However, various embodiments of the disclosure are not limited thereto. For example, at least part of configurations (e.g., the natural language platform 820, the execution engine 840, and the capsule DB 830) of the intelligence server 800 may be embedded in the user terminal 701 (or the electronic device 101 of FIG. 1), and the operation thereof may be performed by the user terminal 701.

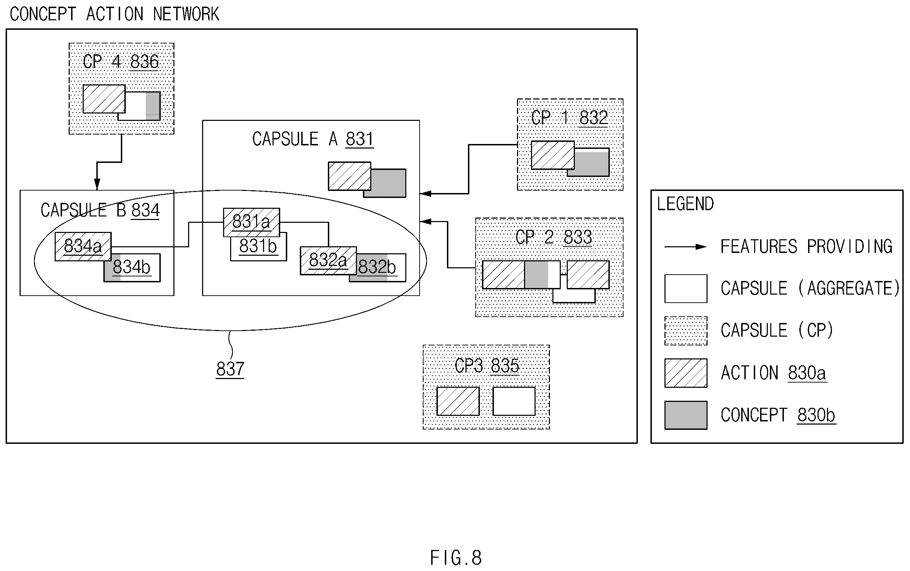

FIG. 8 is a diagram illustrating a form in which relationship information between a concept and an action is stored in a database, according to various embodiments.

A capsule database (e.g., the capsule DB 830) of the intelligence server 700 may store a capsule in the form of a CAN. The capsule DB may store an action for processing a task corresponding to a user's voice input and a parameter necessary for the action, in the CAN form.

The capsule DB may store a plurality capsules (a capsule A 831 and a capsule B 834) respectively corresponding to a plurality of domains (e.g., applications). According to an embodiment, a single capsule (e.g., the capsule A 831) may correspond to a single domain (e.g., a location (geo) or an application). Furthermore, at least one service provider (e.g., CP 1 832 or CP 7 833) for performing a function for a domain associated with the capsule may correspond to one capsule. According to an embodiment, the single capsule may include at least one or more actions 830a and at least one or more concepts 830b for performing a specified function.

The natural language platform 720 may generate a plan for performing a task corresponding to the received voice input, using the capsule stored in a capsule database. For example, the planner module 725 of the natural language platform may generate the plan by using the capsule stored in the capsule database. For example, a plan 837 may be generated by using actions 831a and 832a and concepts 831b and 832b of the capsule A 830a and an action 834a and a concept 834b of the capsule B 834.

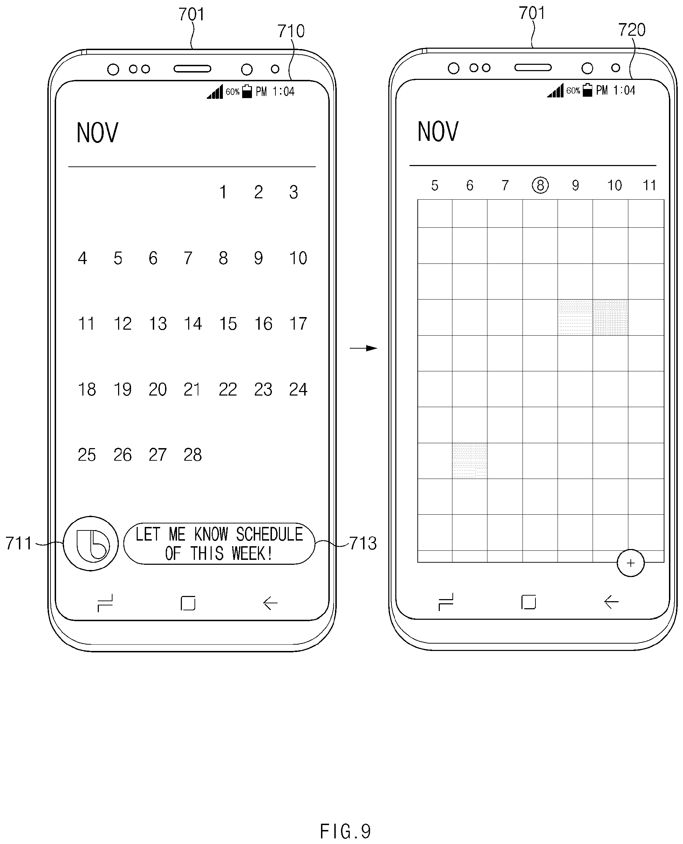

FIG. 9 is a view illustrating a screen in which a user terminal processes a voice input received through an intelligence app, according to various embodiments.

The user terminal 701 may execute an intelligence app to process a user input through the intelligence server 700.

According to an embodiment, on screen 710, when recognizing a specified voice input (e.g., wake up!) or receiving an input via a hardware key (e.g., a dedicated hardware key), the user terminal 701 may launch an intelligence app for processing a voice input. For example, the user terminal 701 may launch the intelligence app in a state where a schedule app is executed. According to an embodiment, the user terminal 701 may display an object (e.g., an icon) 711 corresponding to the intelligence app, on the display 840. According to an embodiment, the user terminal 701 may receive a voice input by a user utterance. For example, the user terminal 701 may receive a voice input saying that "let me know the schedule of this week!". According to an embodiment, the user terminal 701 may display a user interface (UI) 713 (e.g., an input window) of the intelligence app, in which text data of the received voice input is displayed, on a display.

According to an embodiment, on screen 715, the user terminal 701 may display a result corresponding to the received voice input, on the display. For example, the user terminal 701 may receive a plan corresponding to the received user input and may display 'the schedule of this week' on the display depending on the plan.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 640) including one or more instructions that are stored in a storage medium (e.g., internal memory 636 or external memory 638) that is readable by a machine (e.g., the electronic device 601). For example, a processor (e.g., the processor 620) of the machine (e.g., the electronic device 601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit;
a memory configured to store instructions; and
a processor,
wherein the instructions, when executed by the processor, causes the electronic device to:
receive a voice signal according to a user utterance via a microphone or from an external device;
perform first decoding on at least part of the voice signal;
determine a domain corresponding to the user utterance based at least partly on the first decoding result;
perform second decoding on the voice signal based on a language model corresponding to the determined domain to obtain a text corresponding to the voice signal;
replace at least part of the text with a named entity, NE, based on the second decoding result; and
generate a speech recognition result based at least partly on the replacement result.

2. The electronic device of claim 1, wherein the instructions, when executed by the processor, causes the electronic device to segment the voice signal into a plurality of segments; and
wherein the second decoding is further based on the segmented result; and
wherein the at least part of the text that is replaced corresponds to the plurality of segments.

3. The electronic device of claim 2, wherein the instructions, when executed by the processor, causes the electronic device to:
perform voice activity detection, VAD, on the voice signal; and
segment the voice signal based on the VAD result.

4. The electronic device of any one of claims 2 to 3, wherein the instructions, when executed by the processor, causes the electronic device to:
recognize timestamp information corresponding to at least one of at least one word or at least one silent section included in the voice signal; and
segment the voice signal based on a timestamp value difference between consecutive words included in the voice signal.

5. The electronic device of any one of claims 2 to 4, wherein the text includes information for distinguishing the plurality of segments.

6. The electronic device of any one of claims 2 to 5, wherein the instructions, when executed by the processor, causes the electronic device to:
when the determined domain is a domain related to a plurality of contacts, segment the voice signal into the plurality of segments; and
when the determined domain is not a domain related to a plurality of contacts, perform the second decoding without segmenting the voice signal.

7. The electronic device of any one of claims 1 to 6, wherein the instructions, when executed by the processor, causes the electronic device to:
determine at least one candidate named entity based on the second decoding result;
determine whether there is a named entity matching the at least one candidate named entity, based on information related to a predetermined named entity; and
replace the at least one candidate named entity with the matched named entity based at least partly on the determination that there is a named entity matching the at least one candidate named entity.

8. The electronic device of claim 7, wherein the information related to the predetermined named entity includes domain information, text normalization, TN, information, and inverse text normalization, ITN, information, which correspond to one another.

9. The electronic device of claim 7, wherein the instructions, when executed by the processor, causes the electronic device to:
determine a Levenshtein distance between the at least one candidate named entity and the matched named entity; and
when the Levenshtein distance is less than or equal to a predetermined threshold value, replace the at least one candidate named entity with the matched named entity.

10. The electronic device of claim 7, wherein the instructions, when executed by the processor, causes the electronic device to:
when it is determined that there is not a named entity matching the at least one candidate named entity, divide at least part of the text corresponding to the plurality of segments into a plurality of word units; and
determine whether there is a named entity matching at least one word unit of the plurality of word units, based on the information related to the predetermined named entity.

11. The electronic device of claim 10, wherein the instructions, when executed by the processor, causes the electronic device to:
when it is determined that there is no named entity matching the at least one word unit of the plurality of word units word, delete a text corresponding to a linking word from the plurality of word units; and
determine whether there is a named entity matching at least one word unit of the plurality of word units, from which the text corresponding to the linking word is deleted.

12. The electronic device of any one of claims 1 to 11, wherein the language model includes at least one weighted finite state transducer, WFST, model.

13. The electronic device of any one of claims 1 to 12, wherein the instructions, when executed by the processor, causes the electronic device to:
provide a user with a text, which corresponds to at least part of the voice signal and which is generated as the first decoding result.

14. The electronic device of any one of claims 1 to 13, wherein the instructions, when executed by the processor, causes the electronic device to:
preprocess the voice signal before the first decoding, and
wherein the preprocessing includes end point detection, EPD, of the voice signal.

15. The electronic device of any one of claims 1 to 14, wherein the instructions, when executed by the processor, causes the electronic device to:
replace at least part of the text with the NE based on the second decoding result and keyword information previously indexed for the domain.

16. A speech recognizing method of an electronic device, the method comprising:
receiving a voice signal according to a user utterance via a microphone (770) or from an external device;
performing first decoding on at least part of the voice signal;
determining a domain corresponding to the user utterance based at least partly on the first decoding result;
performing second decoding on the voice signal based a language model corresponding to the determined domain to obtain a text corresponding to the voice signal;
replacing at least part of the text with an NE based on the second decoding result; and
generating a speech recognition result based at least partly on the replacement result.

17. The speech recognizing method of claim 16, wherein the replacing the at least part of the text with the NE comprises:
replacing the at least part of the text with the NE based on the second decoding result and keyword information previously indexed for the domain.

## Patentansprüche

1. Elektronische Vorrichtung, Folgendes umfassend:
eine Kommunikationsschaltung;
einen Speicher, der dazu konfiguriert ist, Anweisungen zu speichern; und
einen Prozessor,
wobei die Anweisungen, wenn durch den Prozessor ausgeführt, die elektronische Vorrichtung zu Folgendem veranlassen:
Empfangen eines Sprachsignals gemäß einer Benutzeräußerung über ein Mikrofon oder von einer externen Vorrichtung;
Durchführen einer ersten Dekodierung an zumindest einem Teil des Sprachsignals;
Bestimmen einer Domäne, die der Benutzeräußerung entspricht, basierend zumindest teilweise auf dem ersten Dekodierungsergebnis;
Durchführen einer zweiten Dekodierung an dem Sprachsignal basierend auf einem Sprachmodell, das der bestimmten Domäne entspricht, um einen Text zu erhalten, der dem Sprachsignal entspricht;
Ersetzen zumindest eines Teils des Textes durch eine benannte Entität, NE, basierend auf dem zweiten Dekodierungsergebnis; und
Erzeugen eines Spracherkennungsergebnisses, das zumindest teilweise auf dem Ersetzungsergebnis basiert.

2. Elektronische Vorrichtung nach Anspruch 1, wobei die Anweisungen, wenn durch den Prozessor ausgeführt, die elektronische Vorrichtung veranlassen, das Sprachsignal in eine Vielzahl von Segmenten zu segmentieren; und
wobei die zweite Dekodierung ferner auf dem segmentierten Ergebnis basiert; und
wobei der zumindest eine Teil des Textes, der ersetzt wird, der Vielzahl von Segmenten entspricht.

3. Elektronische Vorrichtung nach Anspruch 2, wobei die Anweisungen, wenn durch den Prozessor ausgeführt, die elektronische Vorrichtung zu Folgendem veranlassen:
Durchführen einer Sprachaktivitätserfassung, VAD, an dem Sprachsignal; und
Segmentieren des Sprachsignals basierend auf dem VAD-Ergebnis.

4. Elektronische Vorrichtung nach einem der Ansprüche 2 bis 3, wobei die Anweisungen, wenn durch den Prozessor ausgeführt, die elektronische Vorrichtung zu Folgendem veranlassen:
Erkennen von Zeitstempelinformationen, die zumindest einem von zumindest einem Wort oder zumindest einem stummen Abschnitt entsprechen, der in dem Sprachsignal eingeschlossen ist; und
Segmentieren des Sprachsignals basierend auf einer Zeitstempelwertdifferenz zwischen aufeinanderfolgenden Wörtern, die in dem Sprachsignal eingeschlossen sind.

5. Elektronische Vorrichtung nach einem der Ansprüche 2 bis 4, wobei der Text Informationen zum Unterscheiden der Vielzahl von Segmenten einschließt.

6. Elektronische Vorrichtung nach einem der Ansprüche 2 bis 5, wobei die Anweisungen, wenn durch den Prozessor ausgeführt, die elektronische Vorrichtung zu Folgendem veranlassen:
wenn die bestimmte Domäne eine Domäne ist, die sich auf eine Vielzahl von Kontakten bezieht, Segmentieren des Sprachsignals in die Vielzahl von Segmenten; und
wenn die bestimmte Domäne keine Domäne ist, die sich auf eine Vielzahl von Kontakten bezieht, Durchführen der zweiten Dekodierung ohne Segmentieren des Sprachsignals.

7. Elektronische Vorrichtung nach einem der Ansprüche 1 bis 6, wobei die Anweisungen, wenn durch den Prozessor ausgeführt, die elektronische Vorrichtung zu Folgendem veranlassen:
Bestimmen zumindest einer benannten Kandidatenentität basierend auf dem zweiten Dekodierungsergebnis;
Bestimmen, ob es eine benannte Entität gibt, die mit der zumindest einen benannten Kandidatenentität übereinstimmt, basierend auf Informationen, die sich auf eine vorbestimmte benannte Entität beziehen; und
Ersetzen der zumindest einen benannten Kandidatenentität durch die übereinstimmende benannte Entität, basierend zumindest teilweise auf der Bestimmung, dass es eine benannte Entität gibt, die mit der zumindest einen benannten Kandidatenentität übereinstimmt.

8. Elektronische Vorrichtung nach Anspruch 7, wobei die Informationen, die sich auf die vorbestimmte benannte Einheit beziehen, Domäneninformationen, Textnormierung, TN, Informationen und inverse Textnormierung, ITN, Informationen, welche einander entsprechen, einschließen.

9. Elektronische Vorrichtung nach Anspruch 7, wobei die Anweisungen, wenn durch den Prozessor ausgeführt, die elektronische Vorrichtung zu Folgendem veranlassen:
Bestimmen einer Levenshtein-Distanz zwischen der zumindest einen benannten Kandidatenentität und der übereinstimmenden benannten Entität; und
wenn die Levenshtein-Distanz weniger als oder gleich einem vorbestimmten Schwellenwert ist, Ersetzen der zumindest einen benannten Kandidatenentität durch die übereinstimmende benannte Entität.

10. Elektronische Vorrichtung nach Anspruch 7, wobei die Anweisungen, wenn durch den Prozessor ausgeführt, die elektronische Vorrichtung zu Folgendem veranlassen:
wenn bestimmt wird, dass es keine benannte Entität gibt, die mit der zumindest einen benannten Kandidatenentität übereinstimmt, Teilen zumindest eines Teils des Textes, der der Vielzahl von Segmenten entspricht, in eine Vielzahl von Worteinheiten; und
Bestimmen, ob es eine benannte Entität gibt, die mit zumindest einer Worteinheit der Vielzahl von Worteinheiten übereinstimmt, basierend auf den Informationen, die sich auf die vorbestimmte benannte Entität beziehen.

11. Elektronische Vorrichtung nach Anspruch 10, wobei die Anweisungen, wenn durch den Prozessor ausgeführt, die elektronische Vorrichtung zu Folgendem veranlassen:
wenn bestimmt wird, dass es keine benannte Entität gibt, die mit der zumindest einen Worteinheit der Vielzahl von Worteinheiten übereinstimmt, Löschen eines Textes, der einem Verknüpfungswort aus der Vielzahl von Worteinheiten entspricht; und
Bestimmen, ob es eine benannte Entität gibt, die mit zumindest einer Worteinheit der Vielzahl von Worteinheiten übereinstimmt, aus welcher der Text, der dem Verknüpfungswort entspricht, gelöscht wird.

12. Elektronische Vorrichtung nach einem der Ansprüche 1 bis 11, wobei das Sprachmodell zumindest ein gewichtetes Umwandler-, WFST-Modell in den finiten Zustand einschließt.

13. Elektronische Vorrichtung nach einem der Ansprüche 1 bis 12, wobei die Anweisungen, wenn durch den Prozessor ausgeführt, die elektronische Vorrichtung zu Folgendem veranlassen:
Bereitstellen eines Textes, welcher zumindest einem Teil des Sprachsignals entspricht und welcher als das erste Dekodierungsergebnis erzeugt wird, an einen Benutzer.

14. Elektronische Vorrichtung nach einem der Ansprüche 1 bis 13, wobei die Anweisungen, wenn durch den Prozessor ausgeführt, die elektronische Vorrichtung zu Folgendem veranlassen:
Vorverarbeitung des Sprachsignals vor der ersten Dekodierung und
wobei die Vorverarbeitung Endpunkterfassung, EPD, des Sprachsignals einschließt.

15. Elektronische Vorrichtung nach einem der Ansprüche 1 bis 14, wobei die Anweisungen, wenn durch den Prozessor ausgeführt, die elektronische Vorrichtung zu Folgendem veranlassen:
Ersetzen zumindest eines Teils des Textes durch die NE basierend auf dem zweiten Dekodierungsergebnis und den zuvor für die Domäne indizierten Schlüsselwortinformationen.

16. Spracherkennungsverfahren einer elektronischen Vorrichtung, wobei das Verfahren Folgendes umfasst:
Empfangen eines Sprachsignals gemäß einer Benutzeräußerung über ein Mikrofon (770) oder von einer externen Vorrichtung;
Durchführen einer ersten Dekodierung an zumindest einem Teil des Sprachsignals;
Bestimmen einer Domäne, die der Benutzeräußerung entspricht, basierend zumindest teilweise auf dem ersten Dekodierungsergebnis;
Durchführen einer zweiten Dekodierung an dem Sprachsignal basierend auf einem Sprachmodell, das der bestimmten Domäne entspricht, um einen Text zu erhalten, der dem Sprachsignal entspricht;
Ersetzen zumindest eines Teils des Textes durch eine NE basierend auf dem zweiten Dekodierungsergebnis; und
Erzeugen eines Spracherkennungsergebnisses basierend zumindest teilweise auf dem Ersetzungsergebnis.

17. Spracherkennungsverfahren nach Anspruch 16, wobei das Ersetzen des zumindest einen Teils des Textes durch die NE Folgendes umfasst:
Ersetzen des zumindest einen Teils des Textes durch die NE basierend auf dem zweiten Dekodierungsergebnis und den Schlüsselwortinformationen, die zuvor für die Domäne indiziert wurden.

## Revendications

1. Dispositif électronique comprenant :
un circuit de communication ;
une mémoire configurée pour stocker des instructions ; et
un processeur,
dans lequel les instructions, lorsqu'elles sont exécutées par le processeur, amènent le dispositif électronique à :
recevoir un signal vocal en fonction d'un énoncé d'utilisateur via un microphone ou en provenance d'un dispositif externe ;
effectuer un premier décodage sur au moins une partie du signal vocal ;
déterminer un domaine correspondant à l'énoncé d'utilisateur sur la base, au moins en partie, du premier résultat de décodage ;
effectuer un deuxième décodage sur le signal vocal sur la base d'un modèle de langage correspondant au domaine déterminé afin d'obtenir un texte correspondant au signal vocal ;
remplacer au moins une partie du texte par une entité nommée, NE, sur la base du deuxième résultat de décodage ; et
générer un résultat de reconnaissance vocale sur la base au moins en partie du résultat de remplacement.

2. Dispositif électronique selon la revendication 1, dans lequel les instructions, lorsqu'elles sont exécutées par le processeur, amènent le dispositif électronique à segmenter le signal vocal en une pluralité de segments ; et
dans lequel le deuxième décodage est en outre basé sur le résultat segmenté ; et
dans lequel l'au moins une partie du texte qui est remplacée correspond à la pluralité de segments.

3. Dispositif électronique selon la revendication 2, dans lequel les instructions, lorsqu'elles sont exécutées par le processeur, amènent le dispositif électronique à :
effectuer une détection d'activité vocale, VAD, sur le signal vocal ; et
segmenter le signal vocal sur la base du résultat VAD.

4. Dispositif électronique selon l'une quelconque des revendications 2 à 3, dans lequel les instructions, lorsqu'elles sont exécutées par le processeur, amènent le dispositif électronique à :
reconnaître les informations d'horodatage correspondant à au moins l'un d'au moins un mot ou d'au moins une section silencieuse incluse dans le signal vocal ; et
segmenter le signal vocal sur la base d'une différence de valeur d'horodatage entre des mots consécutifs inclus dans le signal vocal.

5. Dispositif électronique selon l'une quelconque des revendications 2 à 4, dans lequel le texte comprend des informations pour distinguer la pluralité de segments.

6. Dispositif électronique selon l'une quelconque des revendications 2 à 5, dans lequel les instructions, lorsqu'elles sont exécutées par le processeur, amènent le dispositif électronique à :
lorsque le domaine déterminé est un domaine lié à une pluralité de contacts, segmenter le signal vocal en la pluralité de segments ; et
lorsque le domaine déterminé n'est pas un domaine lié à une pluralité de contacts, effectuer le deuxième décodage sans segmenter le signal vocal.

7. Dispositif électronique selon l'une quelconque des revendications 1 à 6, dans lequel les instructions, lorsqu'elles sont exécutées par le processeur, amènent le dispositif électronique à :
déterminer au moins une entité nommée candidate sur la base du deuxième résultat de décodage ;
déterminer s'il existe une entité nommée correspondant à l'au moins une entité nommée candidate, sur la base d'informations relatives à une entité nommée prédéterminée ; et
remplacer l'au moins une entité nommée candidate par l'entité nommée correspondante sur la base au moins en partie de la détermination qu'il existe une entité nommée correspondant à l'au moins une entité nommée candidate.

8. Dispositif électronique selon la revendication 7, dans lequel les informations relatives à l'entité nommée prédéterminée comprennent des informations de domaine, des informations de normalisation de texte, TN, et des informations de normalisation de texte inverse, ITN, qui correspondent les unes aux autres.

9. Dispositif électronique selon la revendication 7, dans lequel les instructions, lorsqu'elles sont exécutées par le processeur, amènent le dispositif électronique à :
déterminer une distance de Levenshtein entre l'au moins une entité nommée candidate et l'entité nommée correspondante ; et
lorsque la distance de Levenshtein est inférieure ou égale à une valeur de seuil prédéterminée, remplacer l'au moins une entité nommée candidate par l'entité nommée correspondante.

10. Dispositif électronique selon la revendication 7, dans lequel les instructions, lorsqu'elles sont exécutées par le processeur, amènent le dispositif électronique à :
lorsqu'il est déterminé qu'il n'existe pas d'entité nommée correspondant à l'au moins une entité nommée candidate, diviser au moins une partie du texte correspondant à la pluralité de segments en une pluralité d'unités de mots ; et
déterminer s'il existe une entité nommée correspondant à au moins une unité de mot de la pluralité d'unités de mot, sur la base des informations relatives à l'entité nommée prédéterminée.

11. Dispositif électronique selon la revendication 10, dans lequel les instructions, lorsqu'elles sont exécutées par le processeur, amènent le dispositif électronique à :
lorsqu'il est déterminé qu'il n'existe pas d'entité nommée correspondant à l'au moins une unité de mots de la pluralité d'unités de mots, supprimer un texte correspondant à un mot de liaison de la pluralité d'unités de mots ; et
déterminer s'il existe une entité nommée correspondant à au moins une unité de mot de la pluralité d'unités de mot, de laquelle le texte correspondant au mot de liaison est supprimé.

12. Dispositif électronique selon l'une quelconque des revendications 1 à 11, dans lequel le modèle de langage comprend au moins un modèle de transducteur à états finis pondéré, WFST.

13. Dispositif électronique selon l'une quelconque des revendications 1 à 12, dans lequel les instructions, lorsqu'elles sont exécutées par le processeur, amènent le dispositif électronique à :
fournir à un utilisateur un texte, qui correspond à au moins une partie du signal vocal et qui est généré en tant que premier résultat de décodage.

14. Dispositif électronique selon l'une quelconque des revendications 1 à 13, dans lequel les instructions, lorsqu'elles sont exécutées par le processeur, amènent le dispositif électronique à :
pré-traiter le signal vocal avant le premier décodage, et
dans lequel le prétraitement comprend une détection de point final, EPD, du signal vocal.

15. Dispositif électronique selon l'une quelconque des revendications 1 à 14, dans lequel les instructions, lorsqu'elles sont exécutées par le processeur, amènent le dispositif électronique à :
remplacer au moins une partie du texte par la NE sur la base du deuxième résultat de décodage et des informations de mot-clé précédemment indexées pour le domaine.

16. Procédé de reconnaissance vocale d'un dispositif électronique, le procédé comprenant :
la réception d'un signal vocal en fonction d'un énoncé d'utilisateur via un microphone (770) ou en provenance d'un dispositif externe ;
la réalisation d'un premier décodage sur au moins une partie du signal vocal ;
la détermination d'un domaine correspondant à l'énoncé d'utilisateur sur la base, au moins en partie, du premier résultat de décodage ;
la réalisation d'un deuxième décodage sur le signal vocal sur la base d'un modèle de langage correspondant au domaine déterminé afin d'obtenir un texte correspondant au signal vocal ;
le remplacement d'au moins une partie du texte par une NE sur la base du deuxième résultat de décodage ; et
la génération d'un résultat de reconnaissance vocale sur la base au moins en partie du résultat de remplacement.

17. Procédé de reconnaissance vocale selon la revendication 16, dans lequel le remplacement de l'au moins une partie du texte par la NE comprend :
le remplacement de la partie au moins du texte par la NE sur la base du deuxième résultat de décodage et des informations de mot-clé précédemment indexées pour le domaine.
